# EUROPEAN PATENT APPLICATION

(11) **EP 3 951 922 A1**
(43) Date of publication of application: **09.02.2022**
(21) Application number: 20777020.7
(22) Date of filing: 17.03.2020
(51) Int. Cl.: H01M 4/13, H01M 4/139, H01M 4/62, H01M 10/052, H01M 10/0566

(54) **CONDUCTIVE MATERIAL PASTE FOR LITHIUM-ION SECONDARY BATTERY ELECTRODE, SLURRY COMPOSITION FOR LITHIUM-ION SECONDARY BATTERY ELECTRODE, LITHIUM-ION SECONDARY BATTERY ELECTRODE, AND LITHIUM-ION SECONDARY BATTERY**

(30) Priority: 28.03.2019 JP 2019064407
(71) Applicant: Zeon Corporation, Tokyo 100-8246 (JP)
(72) Inventor: ADACHI Yusuke, Tokyo 100-8246 (JP)
(74) Representative: Parchmann, Stefanie
(86) International application number: PCT/JP2020/011819
(87) International publication number: WO 2020/196115

(57) **Abstract**

Provided is a conductive material paste for a lithium ion secondary battery electrode in which conductive carbon is dispersed well. The conductive material paste for a lithium ion secondary battery electrode contains a dispersant (A), a dispersant (B), conductive carbon, and a solvent. The dispersant (A) is a compound that includes not fewer than 2 and not more than 15 aromatic hydrocarbon monocycles and includes not fewer than 2 and not more than 15 functional groups including either or both of a sulfur atom and a nitrogen atom as averages per one molecule. The dispersant (B) includes an isothiazoline compound.

## Description

### TECHNICAL FIELD

The present disclosure relates to a conductive material paste for a lithium ion secondary battery electrode, a slurry composition for a lithium ion secondary battery electrode, an electrode for a lithium ion secondary battery, and a lithium ion secondary battery.

### BACKGROUND

Lithium ion secondary batteries (hereinafter, also referred to simply as "secondary batteries") have characteristics such as compact size, light weight, high energy-density, and the ability to be repeatedly charged and discharged, and are used in a wide variety of applications. Particularly in recent years, lithium ion secondary batteries have been attracting attention as energy supplies for electric vehicles (EVs) and hybrid electric vehicles (HEVs), and there has been demand for even higher performance thereof. Consequently, in recent years, studies have been made to improve battery members such as electrodes for the purpose of achieving even higher lithium ion secondary battery performance.

An electrode for a lithium ion secondary battery, for example, generally includes a current collector and an electrode mixed material layer formed on the current collector. The electrode mixed material layer is typically formed by applying, onto the current collector, a slurry composition for an electrode having an electrode active material, a conductive material, a binder, and so forth dispersed or dissolved in a dispersion medium, and then drying the slurry composition for an electrode so as to bind the electrode active material, the conductive material, and so forth through the binder.

Attempts have been made to improve slurry compositions for electrodes in order to achieve further improvement of secondary battery performance. Specifically, a technique of using a plurality of types of binders as a binder compounded in a slurry composition for an electrode has been reported (for example, refer to Patent Literature (PTL) 1).

PTL 1 proposes using a mixture of a fluoropolymer and a nitrile rubber or hydrogenated nitrile rubber as a binder compounded in a slurry composition for an electrode that is used for forming an electrode mixed material layer such that a synergistic effect of high adhesiveness of the nitrile rubber or hydrogenated nitrile rubber and binding in a fibrous state of the fluoropolymer causes improvement of electrode performance and improvement of secondary battery energy density and cycle characteristics.

On the hand, attempts have also been made to further improve secondary battery performance by altering the production procedure of a slurry composition for an electrode. Specifically, a technique has been reported for improving various aspects of secondary battery performance by using a slurry composition for an electrode that is obtained by producing a conductive material paste having a binder and a conductive material dissolved or dispersed in a solvent and then combining this conductive material paste with an electrode active material (for example, refer to PTL 2 to 4).

PTL 2 proposes that, in production of a slurry for a positive electrode containing a mixture of a fluoropolymer and a hydrogenated nitrile rubber as a binder, the hydrogenated nitrile rubber, a conductive material, and an organic solvent solution of the fluoropolymer are mixed in advance to obtain a conductive material paste, and then this conductive material paste and a positive electrode active material are mixed to produce the slurry for a positive electrode in order to improve positive electrode performance and provide a secondary battery having little reduction of battery capacity during high-current discharge.

PTL 3 proposes that by forming a positive electrode using a slurry composition for a positive electrode that is obtained by separately producing a paste A that contains a lithium-containing transition metal oxide as a positive electrode active material, a first binder A such as a fluoropolymer, and a dispersion medium and a paste B (conductive material paste) that contains carbon black as a conductive material, a second binder B such as a hydrogenated nitrile rubber, and a dispersion medium, and then mixing the paste A and the paste B, the hydrogenated nitrile rubber having low affinity with the fluoropolymer becomes disposed at the surface of the conductive material, and thus aggregation of the conductive material caused by the fluoropolymer is inhibited.

PTL 4 proposes that by producing a conductive material paste containing a conductive material and a binder, diluting the obtained conductive material paste with a solvent, subsequently adding a lithium-transition metal complex oxide as a positive electrode active material, and performing stirring to produce a slurry composition for a positive electrode, dispersibility of the conductive material in a positive electrode mixed material layer is improved, and fine pores that allow permeation of electrolyte solution are increased to thereby ensure ion conductivity of a positive electrode.

### CITATION LIST

### Patent Literature

PTL 1: JP-H9-63590A
PTL 2: JP4502311B2
PTL 3: JP3585122B2
PTL 4: JP2001-283831A

### SUMMARY

### (Technical Problem)

Conductive carbon such as carbon nanotubes can suitably be used as a conductive material in a conductive material paste such as described above from a viewpoint of having excellent chemical stability.

In a situation in which conductive carbon is used as a conductive material, it is desirable that aggregation, sedimentation, or the like of the conductive carbon is inhibited and that the conductive carbon is dispersed well in a conductive material paste. Good dispersion of the conductive carbon in the conductive material paste makes it possible to increase the stability over time of the conductive material paste and a slurry composition produced using the conductive material paste, and enables long-term storage and long-term transport of the conductive material paste and the slurry composition. Moreover, in a situation in which an electrode mixed material layer is formed using a slurry composition that is produced using the conductive material paste, good dispersion of the conductive carbon in the conductive material paste makes it possible to disperse the conductive carbon well in the electrode mixed material layer and form good conduction paths, and thus can improve battery characteristics such as cycle characteristics of a lithium ion secondary battery.

However, there is room for improvement of conductive material pastes according to the conventional techniques described above in terms of dispersing conductive carbon.

Accordingly, one object of the present disclosure is to provide a conductive material paste for a lithium ion secondary battery electrode and a slurry composition for a lithium ion secondary battery electrode in which conductive carbon is dispersed well.

Another object of the present disclosure is to provide an electrode for a lithium ion secondary battery that can sufficiently improve battery characteristics of a secondary battery and also to provide a lithium ion secondary battery that has excellent battery characteristics such as cycle characteristics.

### (Solution to Problem)

The inventor conducted diligent investigation with the aim of solving the problem set forth above. The inventor discovered that in the case of a conductive material paste that contains a dispersant (A) including specific numbers of aromatic hydrocarbon monocycles and specific functional groups as averages per one molecule, a dispersant (B) including an isothiazoline compound, conductive carbon, and a solvent, the conductive carbon is dispersed well in the conductive material paste, and, in this manner, the inventor completed the present disclosure.

Specifically, the present disclosure aims to advantageously solve the problem set forth above, and a presently disclosed conductive material paste for a lithium ion secondary battery electrode comprises a dispersant (A), a dispersant (B), conductive carbon, and a solvent, wherein the dispersant (A) is a compound that includes not fewer than 2 and not more than 15 aromatic hydrocarbon monocycles and includes not fewer than 2 and not more than 15 functional groups including either or both of a sulfur atom and a nitrogen atom as averages per one molecule, and the dispersant (B) includes an isothiazoline compound. A conductive material paste that contains a dispersant (A) including specific numbers of aromatic hydrocarbon monocycles and specific functional groups as averages per one molecule, a dispersant (B) including an isothiazoline compound, conductive carbon, and a solvent in this manner has the conductive carbon dispersed well therein.

Note that the average number of aromatic hydrocarbon monocycles and the average number of functional groups including either or both of a sulfur atom and a nitrogen atom per one molecule of the dispersant (A) can be measured by methods described in the present specification.

In the presently disclosed conductive material paste for a lithium ion secondary battery electrode, the dispersant (A) preferably has a weight-average molecular weight of not less than 500 and not more than 5,000. When the weight-average molecular weight of the dispersant (A) is within the specific range set forth above in this manner, an excessive increase of viscosity of the conductive material paste can be inhibited while also dispersing the conductive carbon even better in the conductive material paste, and deposition of lithium metal at a negative electrode of a secondary battery can be inhibited in a situation in which the negative electrode is formed using a slurry composition that contains the conductive material paste.

Note that the weight-average molecular weight of the dispersant (A) can be measured by a method described in the EXAMPLES section of the present specification.

The presently disclosed conductive material paste for a lithium ion secondary battery electrode preferably contains not less than 0.1 parts by mass and not more than 50.0 parts by mass of the dispersant (A) per 100 parts by mass of the conductive carbon. When the content of the dispersant (A) in the conductive material paste is within the specific range set forth above in this manner, the conductive carbon can be dispersed even better in the conductive material paste while also inhibiting an excessive increase of viscosity of the conductive material paste.

In the presently disclosed conductive material paste for a lithium ion secondary battery electrode, the dispersant (B) preferably further includes a compound (b), wherein the compound (b) includes not fewer than one and not more than two aromatic hydrocarbon monocycles and includes one functional group including either or both of a sulfur atom and a nitrogen atom, and the compound (b) has a molecular weight of not less than 50 and not more than 500. When the dispersant (B) further includes a compound (b) having the specific structure and molecular weight set forth above in this manner, the conductive carbon can be dispersed even better in the conductive material paste.

The presently disclosed conductive material paste for a lithium ion secondary battery electrode preferably contains not less than 0.01 parts by mass and not more than 25.00 parts by mass of the dispersant (B) per 100 parts by mass of the conductive carbon. When the content of the dispersant (B) in the conductive material paste is within the specific range set forth above in this manner, an excessive increase of viscosity of the conductive material paste can be inhibited while also dispersing the conductive carbon even better in the conductive material paste, and deposition of lithium metal at a negative electrode of a secondary battery can be inhibited in a situation in which the negative electrode is formed using a slurry composition that contains the conductive material paste.

In the presently disclosed conductive material paste for a lithium ion secondary battery electrode, the conductive carbon preferably includes one or more carbon nanotubes. When the conductive carbon includes carbon nanotubes in this manner, cycle characteristics of a secondary battery can be enhanced.

In the presently disclosed conductive material paste for a lithium ion secondary battery electrode, the carbon nanotubes preferably have a BET specific surface area of not less than 10 m²/g and not more than 400 m²/g. When the BET specific surface area of the carbon nanotubes is within the specific range set forth above in this manner, cycle characteristics of a secondary battery can be enhanced while also inhibiting deposition of lithium metal at a negative electrode of a secondary battery in a situation in which the negative electrode is formed using a slurry composition that contains the conductive material paste.

Note that the term "BET specific surface area" as used in the present disclosure refers to nitrogen adsorption specific surface area measured using the BET method, and can be measured in accordance with ASTM D3037-81.

In the presently disclosed conductive material paste for a lithium ion secondary battery electrode, the carbon nanotubes preferably have an average length of not less than 1.0 µm and not more than 60.0 µm. When the average length of the carbon nanotubes is within the specific range set forth above in this manner, the conductive carbon can be dispersed even better in the conductive material paste, and cycle characteristics of a secondary battery can be enhanced.

Note that the "average length of carbon nanotubes" referred to in the present disclosure can be determined by measuring a largest axis (major axis) of 100 randomly selected carbon nanotubes using a TEM (transmission electron microscope) and then calculating an average value.

In the presently disclosed conductive material paste for a lithium ion secondary battery electrode, the carbon nanotubes preferably have an aspect ratio of not less than 50 and not more than 1,000. When the aspect ratio of the carbon nanotubes is within the specific range set forth above in this manner, the conductive carbon can be dispersed even better in the conductive material paste, and cycle characteristics of a secondary battery can be enhanced.

Note that the "aspect ratio of carbon nanotubes" referred to in the present disclosure can be determined by measuring the largest axis (major axis) and the outer diameter (minor axis) in a direction perpendicular to the largest axis, and then calculating an average value of the ratio of the major axis and the minor axis (major axis/minor axis).

Moreover, the present disclosure aims to advantageously solve the problem set forth above, and a presently disclosed slurry composition for a lithium ion secondary battery electrode comprises: an electrode active material; and any one of the conductive material pastes for a lithium ion secondary battery electrode set forth above. A slurry composition for a lithium ion secondary battery electrode that contains an electrode active material and any one of the conductive material pastes for a lithium ion secondary battery electrode set forth above in this manner has the conductive carbon dispersed well therein.

Furthermore, the present disclosure aims to advantageously solve the problem set forth above, and a presently disclosed electrode for a lithium ion secondary battery comprises an electrode mixed material layer formed using the slurry composition for a lithium ion secondary battery electrode set forth above. An electrode for a lithium ion secondary battery that includes an electrode mixed material layer formed using the slurry composition for a lithium ion secondary battery electrode set forth above in this manner can sufficiently improve battery characteristics of a secondary battery.

Also, the present disclosure aims to advantageously solve the problem set forth above, and a presently disclosed lithium ion secondary battery comprises a positive electrode, a negative electrode, a separator, and an electrolyte solution, wherein at least one of the positive electrode and the negative electrode is the electrode for a lithium ion secondary battery set forth above. A lithium ion secondary battery that includes the electrode for a lithium ion secondary battery set forth above in this manner has excellent battery characteristics such as cycle characteristics.

### (Advantageous Effect)

According to the present disclosure, it is possible to provide a conductive material paste for a lithium ion secondary battery electrode and a slurry composition for a lithium ion secondary battery electrode in which conductive carbon is dispersed well.

Moreover, according to the present disclosure, it is possible to provide an electrode for a lithium ion secondary battery that can sufficiently improve battery characteristics of a secondary battery and also to provide a lithium ion secondary battery that has excellent battery characteristics such as cycle characteristics.

### DETAILED DESCRIPTION

The following provides a detailed description of embodiments of the present disclosure.

The presently disclosed conductive material paste for a lithium ion secondary battery electrode (hereinafter, also referred to simply as a "conductive material paste") is used as a material in production of a slurry composition for a lithium ion secondary battery electrode. Moreover, the presently disclosed slurry composition for a lithium ion secondary battery electrode (hereinafter, also referred to simply as a "slurry composition") is produced using the presently disclosed conductive material paste. Furthermore, the presently disclosed electrode for a lithium ion secondary battery (hereinafter, also referred to simply as an "electrode") is produced using the presently disclosed slurry composition. Also, a feature of the presently disclosed electrode is that it includes an electrode mixed material layer formed using the presently disclosed slurry composition. Moreover, a feature of the presently disclosed lithium ion secondary battery is that it includes the presently disclosed electrode.

### (Conductive material paste for lithium ion secondary battery electrode)

A feature of the presently disclosed conductive material paste for a lithium ion secondary battery electrode is that it contains a dispersant (A) including specific numbers of aromatic hydrocarbon monocycles and specific functional groups as averages per one molecule, a dispersant (B) including an isothiazoline compound, conductive carbon, and a solvent.

A conductive material paste that contains a dispersant (A) including specific numbers of aromatic hydrocarbon monocycles and specific functional groups as averages per one molecule, a dispersant (B) including an isothiazoline compound, conductive carbon, and a solvent in this manner has the conductive carbon dispersed well therein. Consequently, the presently disclosed conductive material paste and a slurry composition produced using the conductive material paste have excellent stability over time and can undergo long-term storage and long-term transport. Moreover, in a situation in which an electrode mixed material layer is formed using a slurry composition that has been produced using the presently disclosed conductive material paste, the conductive carbon can be dispersed well in the electrode mixed material layer and good conduction paths can be formed, and thus battery characteristics such as cycle characteristics of a lithium ion secondary battery can be improved.

Furthermore, deposition of lithium metal at a negative electrode of a secondary battery can be inhibited in a situation in which the negative electrode is formed using a slurry composition that is produced using the presently disclosed conductive material paste.

Note that the presently disclosed conductive material paste may further contain other components besides the dispersant (A), dispersant (B), conductive carbon, and solvent mentioned above. In a case in which the presently disclosed conductive material paste contains an electrode active material as another component, for example, the content of the electrode active material in 100 parts by mass of all solid content of the conductive material paste is preferably 10 parts by mass or less, and more preferably 0 parts by mass. In other words, it is more preferable that the presently disclosed conductive material paste does not contain an electrode active material. The term "electrode active material" refers to an electrode active material or the like such as described further below that can be contained in the presently disclosed slurry composition for a lithium ion secondary battery electrode, for example.

### <Dispersant (A)>

The dispersant (A) is a compound that includes specific numbers of aromatic hydrocarbon monocycles and functional groups including either or both of a sulfur atom and a nitrogen atom as averages per one molecule.

As a result of having a chain molecular structure, the dispersant (A) can adsorb to the surface of the conductive carbon and can form a steric protective layer. Accordingly, the inclusion of the dispersant (A) in the conductive material paste can inhibit aggregation, sedimentation, or the like of the conductive carbon and enables dispersion of the conductive carbon in the conductive material paste.

### «Ring constituting aromatic hydrocarbon ring»

The dispersant (A) includes a specific number of aromatic hydrocarbon monocycles as an average per one molecule. The term "aromatic hydrocarbon monocycle" as used in the present disclosure refers to an aromatic hydrocarbon monocycle that constitutes an aromatic ring structure.

The term "aromatic ring structure" refers to a cyclic structure having aromaticity in the broad sense according to Huckel's law. In other words, "aromatic ring structure" refers to cyclic conjugated structures including 4n + 2 π-electrons (i.e., aromatic hydrocarbon ring structures) and structures that display aromaticity through the contribution of a lone pair of electrons of a heteroatom such as sulfur, oxygen, or nitrogen to the π-electron system such as in the case of a carbazole ring or the like (i.e., aromatic heterocyclic structures).

Examples of aromatic hydrocarbon ring structures that include an aromatic hydrocarbon monocycle include a structure including one aromatic hydrocarbon monocycle such as a benzene ring; a structure including two aromatic hydrocarbon monocycles such as a naphthalene ring; and a structure including three aromatic hydrocarbon monocycles such as an anthracene ring. Of these structures, the dispersant (A) preferably includes an aromatic hydrocarbon ring structure including two aromatic hydrocarbon monocycles from a viewpoint of affinity with the solvent and the conductive carbon, and more preferably includes a naphthalene ring.

Examples of aromatic heterocyclic structures that include an aromatic hydrocarbon monocycle include a carbazole ring. Note that among the three monocycles included in a carbazole ring, the single five-membered ring that shares part of its structure with each of two benzene rings is not considered to correspond to an "aromatic hydrocarbon monocycle" in the present disclosure. Accordingly, a carbazole ring is treated as a structure that includes only two aromatic hydrocarbon monocycles in one molecule of the dispersant (A). Also note that aromatic heterocyclic structures such as a pyrrole ring, a furan ring, a thiophene ring, an imidazole ring, and a pyridine ring are structures that are composed of only an aromatic heteromonocycle including nitrogen (N), oxygen (O), sulfur (S), or the like, and thus are not considered to include an aromatic hydrocarbon monocycle in the present disclosure.

Furthermore, a monocycle that constitutes a ring structure other than an aromatic ring structure such as described above and that at least partially shares its structure with an aromatic ring structure is not considered to correspond to an "aromatic hydrocarbon monocycle".

For example, among the two rings that constitute a benzocyclobutene ring, the four-membered ring that shares part of its structure with the benzene ring is not considered to correspond to an "aromatic hydrocarbon monocycle" in the present disclosure. Accordingly, a benzocyclobutene ring is treated as a structure that includes one benzene ring (i.e., a structure including only one aromatic hydrocarbon monocycle) in one molecule of the dispersant (A). Likewise, among the three monocycles included in a fluorene ring, for example, the five-membered ring that shares part of its structure with each of two benzene rings is not considered to correspond to an "aromatic hydrocarbon monocycle" in the present disclosure. Accordingly, a fluorene ring is treated as a structure that includes two benzene rings (i.e., a structure including only two aromatic hydrocarbon monocycles) in one molecule of the dispersant (A).

So long as the dispersant (A) includes aromatic ring structures such as described above such that a specific number of aromatic hydrocarbon monocycles are included as an average per one molecule, the dispersant (A) may include one or a plurality of one type of aromatic ring structure, or may include one or a plurality of a plurality of types of aromatic ring structures.

The dispersant (A) is required to include 2 or more aromatic hydrocarbon monocycles as an average per one molecule, and preferably includes 3 or more, more preferably 4 or more, and even more preferably 5 or more aromatic hydrocarbon monocycles as an average per one molecule. Moreover, the dispersant (A) is required to include 15 or fewer aromatic hydrocarbon monocycles as an average per one molecule, and preferably includes 12 or fewer, more preferably 10 or fewer, even more preferably 8 or fewer, and further preferably 7 or fewer aromatic hydrocarbon monocycles as an average per one molecule. When the average number of aromatic hydrocarbon monocycles per one molecule of the dispersant (A) is not less than any of the lower limits set forth above, adsorptivity of the dispersant (A) with respect to the conductive carbon can be increased, and sedimentation of the conductive carbon can be inhibited to thereby enable good dispersion of the conductive carbon in the conductive material paste. On the other hand, when the average number of aromatic hydrocarbon monocycles per one molecule of the dispersant (A) is not more than any of the upper limits set forth above, an excessive increase of viscosity of the conductive material paste can be inhibited by forming a sufficient steric protective layer at the surface of the conductive carbon.

Note that the average number of aromatic hydrocarbon monocycles per one molecule of the dispersant (A) can be determined through ¹H-NMR measurement.

### «Functional group including either or both of sulfur and nitrogen»

The dispersant (A) includes a specific number of functional groups including either or both of a sulfur atom and a nitrogen atom (hereinafter, also referred to simply as "S/N-containing functional groups") as an average per one molecule.

The S/N-containing functional groups may be functional groups that include only one of a sulfur atom and a nitrogen atom or functional groups that include both a sulfur atom and a nitrogen atom, though functional groups that include only a sulfur atom are preferable from a viewpoint of inhibiting an excessive increase of viscosity of the conductive material paste and increasing peel strength of a formed electrode.

In other words, the dispersant (A) includes at least one type of functional group selected from the group consisting of S-containing functional groups (functional groups including a sulfur atom but not including a nitrogen atom), N-containing functional groups (functional groups including a nitrogen atom but not including a sulfur atom), and S+N-containing functional groups (functional groups including both a sulfur atom and a nitrogen atom) as the S/N-containing functional groups, and preferably includes only S-containing functional groups as the S/N-containing functional groups from a viewpoint of inhibiting an excessive increase of viscosity of the conductive material paste and increasing peel strength of a formed electrode.

Examples of functional groups that include a sulfur atom but do not include a nitrogen atom (S-containing functional groups) include a sulfo group (-SO₃H) and salts thereof (for example, a sodium sulfonate group (-SO₃Na)); a thiol group (-SH); an acylthio group (-S-CO-R; R represents any substituent [however, a nitrogen atom and/or a functional group including a nitrogen atom are excluded]); a sulfide group (-S-); and polysulfide groups (-(S)ₙ-) such as a disulfide group (-S-S-) and a tetrasulfide group (-S-S-S-S-). Moreover, the S-containing functional group may be a functional group including an aromatic heterocyclic structure that includes a sulfur atom, such as a thienyl group.

Of these examples, a sulfo group and salts thereof are preferable as S-containing functional groups from a viewpoint of forming a sufficient steric protective layer at the surface of the conductive carbon and inhibiting an excessive increase of viscosity of the conductive material paste, with a sodium sulfonate group (-SO₃Na) being more preferable.

Note that the dispersant (A) may include just one of these types of functional groups or may include a plurality of these types of functional groups.

Moreover, the S-containing functional groups described above are each treated as one "functional group including a sulfur atom" in one molecule of the dispersant (A) even in a case in which the S-containing functional group includes a plurality of sulfur atoms.

Examples of functional groups that include a nitrogen atom but do not include a sulfur atom (N-containing functional groups) include substituted or unsubstituted amino groups (-NH₂, -NHR¹, -NR¹R², and -N⁺R¹R²R³, where R¹ to R³ represent any substituents with a proviso that a nitrogen atom and/or a functional group including a nitrogen atom are excluded) and substituted or unsubstituted imino groups (=NH and =NR⁴, where R⁴ represents any substituent with a proviso that a nitrogen atom and/or a functional group including a nitrogen atom are excluded); functional groups including an aromatic heterocyclic structure that includes a nitrogen atom, such as a pyrrole group, a pyridyl group, a pyrazole group, an imidazole group, and a carbazole group; a nitro group (-NO₂); and a nitrile group (-CN).

Of these examples, functional groups including an aromatic heterocyclic structure that includes a nitrogen atom are preferable as N-containing functional groups from a viewpoint of forming a sufficient steric protective layer at the surface of the conductive carbon, with an imidazole group being more preferable.

Note that the dispersant (A) may include just one of these types of functional groups or may include a plurality of these types of functional groups.

Moreover, the N-containing functional groups described above are each treated as one "functional group including a nitrogen atom" in one molecule of the dispersant (A) even in a case in which the N-containing functional group includes a plurality of nitrogen atoms.

Moreover, the substituted or unsubstituted amino groups and imino groups described above are also inclusive of substituted or unsubstituted amino groups and imino groups that are present as part of the structure of another functional group, such as a carbamoyl group (-CONH₂).

Examples of functional groups that include both a sulfur atom and a nitrogen atom (S+N-containing functional groups) include functional groups including an aromatic heterocyclic structure that includes both a sulfur atom and a nitrogen atom, such as a thiazolidine group, an isothiazolidine group, a thiazole group, and an isothiazole group. Note that the dispersant (A) may include just one of these types of functional groups or may include a plurality of these types of functional groups. Also note that the S+N-containing functional groups described above are each treated as one "functional group including both a sulfur atom and a nitrogen atom" in one molecule of the dispersant (A).

The dispersant (A) is required to include 2 or more functional groups including either or both of a sulfur atom and a nitrogen atom as an average per one molecule, and preferably includes 3 or more, and more preferably 4 or more functional groups including either or both of a sulfur atom and a nitrogen atom as an average per one molecule. Moreover, the dispersant (A) is required to include 15 or fewer functional groups including either or both of a sulfur atom and a nitrogen atom as an average per one molecule, and preferably includes 14 or fewer, more preferably 13 or fewer, and even more preferably 10 or fewer functional groups including either or both of a sulfur atom and a nitrogen atom as an average per one molecule. When the average number of S/N-containing functional groups per one molecule of the dispersant (A) is not less than any of the lower limits set forth above, a sufficient steric protective layer can be formed at the surface of the conductive carbon, and thus an excessive increase of viscosity of the conductive material paste can be inhibited. On the other hand, when the average number of S/N-containing functional groups per one molecule of the dispersant (A) is not more than any of the upper limits set forth above, adsorptivity of the dispersant (A) with respect to the conductive carbon increases, and sedimentation of the conductive carbon is inhibited, which enables good dispersion of the conductive carbon in the conductive material paste.

Note that the average number of S/N-containing functional groups per one molecule of the dispersant (A) can be determined by ¹³C-NMR measurement.

### «Weight-average molecular weight»

The weight-average molecular weight of the dispersant (A) is preferably 500 or more, and more preferably 600 or more, and is preferably 5,000 or less, more preferably 4,000 or less, and even more preferably 3,000 or less. When the weight-average molecular weight of the dispersant (A) is not less than any of the lower limits set forth above, a sufficient steric protective layer can be formed at the surface of the conductive carbon, which can inhibit an excessive increase of viscosity of the conductive material paste. On the other hand, when the weight-average molecular weight of the dispersant (A) is not more than any of the upper limits set forth above, adsorptivity of the dispersant (A) with respect to the conductive carbon further increases, and sedimentation of the conductive carbon is further inhibited, which enables even better dispersion of the conductive carbon in the conductive material paste. Moreover, when the weight-average molecular weight of the dispersant (A) is not more than any of the upper limits set forth above, deposition of lithium metal at a negative electrode of a secondary battery can be further inhibited in a situation in which the negative electrode is formed using a slurry composition that contains the conductive material paste.

The viscosity of a 20 mass% aqueous solution of the dispersant (A) at 25°C and 60 rpm is preferably 5 mPa·s or more, more preferably 8 mPa·s or more, even more preferably 10 mPa·s or more, and further preferably 15 mPa·s or more, and is preferably 150 mPa·s or less, more preferably 80 mPa·s or less, and even more preferably 50 mPa·s or less. When the viscosity of a 20 mass% aqueous solution of the dispersant (A) is not less than any of the lower limits set forth above, sedimentation of the conductive carbon is inhibited. On the other hand, when the viscosity of a 20 mass% aqueous solution of the dispersant (A) is not more than any of the upper limits set forth above, dispersibility of the conductive carbon improves.

Note that the viscosity of a 20 mass% aqueous solution of the dispersant (A) at 25°C and 60 rpm can be measured by a method described in the EXAMPLES section of the present specification.

### «Production method of dispersant (A)»

No specific limitations are placed on the method by which the dispersant (A) is produced so long as a compound that includes the above-described specific numbers of aromatic hydrocarbon monocycles and S/N-containing functional groups as averages per one molecule is obtained. Examples of methods that can be adopted include:
(1) a method in which a monomer including an aromatic hydrocarbon monocycle and a monomer including a S/N-containing functional group are polymerized or in which monomers each including both an aromatic hydrocarbon monocycle and a S/N-containing functional group are polymerized to obtain the dispersant (A) as a polymer (polymerization method); and
(2) a method in which a monomer including both an aromatic hydrocarbon monocycle and a S/N-containing functional group (for example, naphthalene sulfonic acid) is subjected to a condensation reaction with another monomer such as formaldehyde to obtain the dispersant (A) as a condensate (condensation method).

The following describes the polymerization method (1) and the condensation method (2) in detail.

### {(1) Polymerization method}

In the polymerization method (1), a monomer including an aromatic hydrocarbon monocycle and a monomer including a S/N-containing functional group are polymerized or monomers each including both an aromatic hydrocarbon monocycle and a S/N-containing functional group are polymerized to obtain the dispersant (A) as a polymer. The obtained polymer may be used in that form as the dispersant (A), or a salt such as a sodium salt that is obtained by adding a basic aqueous solution such as sodium hydroxide aqueous solution to the polymer in order to neutralize the polymer may be used as the dispersant (A).

Examples of monomers including an aromatic hydrocarbon monocycle that can be used include monomers that include one aromatic hydrocarbon monocycle, such as styrene; monomers that include two aromatic hydrocarbon monocycles, such as vinylnaphthalene (1-vinylnaphthalene or 2-vinylnaphthalene), vinylfluorene, and vinylcarbazole; and monomers that include three aromatic hydrocarbon monocycles, such as vinylanthracene. Of these examples, it is preferable to use a monomer that includes two aromatic hydrocarbon monocycles from a viewpoint of affinity with the solvent and the conductive carbon, and more preferable to use vinylnaphthalene.

Although either a monomer including a functional group that includes only one of a sulfur atom and a nitrogen atom or a monomer including a functional group that includes both of a sulfur atom and a nitrogen atom can be used as a monomer including a functional group that includes either or both of a sulfur atom and a nitrogen atom, it is preferable to use a monomer including a functional group that includes only a sulfur atom from a viewpoint of inhibiting an excessive increase of viscosity of the conductive material paste and increasing peel strength of a formed electrode.

Examples of monomers including a functional group that includes a sulfur atom but does not include a nitrogen atom (S-containing functional group) that can be used include olefin sulfonic acids such as vinyl sulfonic acid (ethylene sulfonic acid), allyl sulfonic acid, and methallyl sulfonic acid, and salts thereof. Of these monomers, it is preferable to use allyl sulfonic acid and salts thereof from a viewpoint of adsorption ability with respect to the conductive carbon and polymerizability with a monomer including an aromatic hydrocarbon monocycle.

Examples of monomers including a functional group that includes a nitrogen atom but does not include a sulfur atom (N-containing functional group) that can be used include monomers that include an aromatic heterocyclic structure, such as 1-vinylpyridine, 2-vinylpyridine, 3-vinylpyridine, 4-vinylpyridine, 1-vinylimidazole, and 2-vinylimidazole; and dimethylaminopropyl acrylamide. Of these monomers, it is preferable to use a monomer that includes an aromatic heterocyclic structure from a viewpoint of adsorption ability with respect to the conductive carbon and polymerizability with a monomer including an aromatic hydrocarbon monocycle, and more preferable to use 1-vinylimidazole.

Examples of monomers including a functional group that includes both a sulfur atom and a nitrogen atom that can be used include acrylamidodimethylpropane sulfonic acid.

Examples of monomers including both an aromatic hydrocarbon monocycle and a functional group including either or both of a sulfur atom and a nitrogen atom that can be used include aromatic sulfonic acids such as styrene sulfonic acid, vinylnaphthalene monosulfonic acid, vinylnaphthalene disulfonic acid, vinylnaphthalene trisulfonic acid, vinylanthracene monosulfonic acid, vinylanthracene disulfonic acid, and vinylanthracene trisulfonic acid.

Note that other monomers besides the monomers described above may be used in the polymerization method (1) to the extent that the desired effects are obtained.

In the polymerization method (1), the dispersant (A) can be obtained as a polymer formed through polymerization of a monomer composition containing monomers such as described above.

The proportional content of each monomer in the monomer composition can be adjusted as appropriate so that the dispersant (A) that is obtained as a polymer includes the previously described specific numbers of aromatic hydrocarbon monocycles and S/N-containing functional groups as averages per one molecule.

Although the polymerization method is not specifically limited, a method such as solution polymerization, suspension polymerization, bulk polymerization, or emulsion polymerization may be used. A known emulsifier or polymerization initiator may be used in these polymerization methods as necessary.

From a viewpoint of controlling the molecular weight of the polymer, the polymerization initiator is preferably an azo polymerization initiator or a persulfate, more preferably an azobis polymerization initiator, and particularly preferably 2,2'-azobis(2,4-dimethyl-4-methoxy)valeronitrile. Note that a commercially available product such as V-70 produced by FUJIFILM Wako Pure Chemical Corporation, for example, can be used as the 2,2'-azobis(2,4-dimethyl-4-methoxy)valeronitrile.

The amount of the polymerization initiator that is used is preferably not less than 2 parts by mass and not more than 60 parts by mass relative to 100 parts by mass of all used monomer. When the used amount of the polymerization initiator is not less than the lower limit set forth above, the dispersant (A) obtained as a polymer has excellent dispersibility. On the other hand, when the used amount of the polymerization initiator is not more than the upper limit set forth above, the dispersant (A) obtained as a polymer can include the previously described specific numbers of aromatic hydrocarbon monocycles and S/N-containing functional groups as averages per one molecule.

The dispersant (A) produced as a polymer by the polymerization method (1) is a polymer that includes structural units (monomer units) derived from each monomer that is used.

Note that in a case in which the dispersant (A) is a polymer produced through copolymerization of a plurality of types of monomers, the mass ratio of structural units (monomer units) derived from a given monomer among the overall dispersant (A) (polymer) is normally, unless otherwise specified, the same as the mass ratio (charging ratio) of that monomer among all monomers used in polymerization of the polymer.

### {(2) Condensation method}

In the condensation method (2), a monomer that includes both an aromatic hydrocarbon monocycle and a S/N-containing functional group is subjected to a condensation reaction with another monomer to obtain the dispersant (A) as a condensate.

Examples of monomers including both an aromatic hydrocarbon monocycle and a S/N-containing functional group that can suitably be used include naphthalene sulfonic acid and salts thereof. Note that the naphthalene sulfonic acid can be obtained by reacting naphthalene and sulfuric acid by a commonly known method so as to introduce a sulfo group into naphthalene.

Moreover, examples of other monomers that can be subjected to a condensation reaction with the aforementioned monomer include formaldehyde.

The condensation reaction of the monomer including both an aromatic hydrocarbon monocycle and a S/N-containing functional group, such as naphthalene sulfonic acid, and the other monomer can be carried out by a commonly known method.

For example, an aqueous solution of formaldehyde (formalin) as another monomer may be added dropwise to naphthalene sulfonic acid as a monomer including both an aromatic hydrocarbon monocycle and a S/N-containing functional group while performing heating thereof to obtain a naphthalene sulfonic acid-formalin condensate. Note that the obtained naphthalene sulfonic acid-formalin condensate may be used in that form as the dispersant (A), or a sodium salt and/or potassium salt of the naphthalene sulfonic acid-formalin condensate that is obtained by adding sodium hydroxide aqueous solution and/or potassium hydroxide aqueous solution to the obtained naphthalene sulfonic acid-formalin condensate in order to neutralize the naphthalene sulfonic acid-formalin condensate may be used as the dispersant (A).

### «Amount of dispersant (A)»

The presently disclosed conductive material paste preferably contains 0.1 parts by mass or more, more preferably 0.5 parts by mass or more, even more preferably 1.0 parts by mass or more, and further preferably 10.0 parts by mass or more of the dispersant (A) per 100 parts by mass of the conductive carbon, and preferably contains 50.0 parts by mass or less, more preferably 40.0 parts by mass or less, and even more preferably 20.0 parts by mass or less of the dispersant (A) per 100 parts by mass of the conductive carbon. When the amount of the dispersant (A) in the conductive material paste is not less than any of the lower limits set forth above, the amount of the dispersant (A) that is adsorbed to the surface of the conductive carbon increases, which can further inhibit sedimentation or the like of the conductive carbon and thereby enables even better dispersion of the conductive carbon in the conductive material paste. On the other hand, when the amount of the dispersant (A) in the conductive material paste is not more than any of the upper limits set forth above, a sufficient steric protective layer can be formed at the surface of the conductive carbon, which can inhibit an excessive increase of viscosity of the conductive material paste.

### <Dispersant (B)>

The dispersant (B) includes an isothiazoline compound and can optionally further include a compound (b) having a specific structure and molecular weight.

### «Isothiazoline compound»

The dispersant (B) includes an isothiazoline compound.

The isothiazoline compound is a component that, in the conductive material paste, can adsorb to regions of the surface of the conductive carbon where the previously described dispersant (A) is not adsorbed. Accordingly, the inclusion of the isothiazoline compound as the dispersant (B) in the conductive material paste can inhibit aggregation, sedimentation, or the like of the conductive carbon and enables good dispersion of the conductive carbon in the conductive material paste. Moreover, the inclusion of the isothiazoline compound as the dispersant (B) in the conductive material paste can inhibit deposition of lithium metal at a negative electrode of a secondary battery in a situation in which the negative electrode is formed using a slurry composition that contains the conductive material paste.

Note that the isothiazoline compound referred to in the present disclosure is taken to be a compound that does not correspond to the previously described dispersant (A).

More specifically, the isothiazoline compound has a structure indicated by the following formula (1). 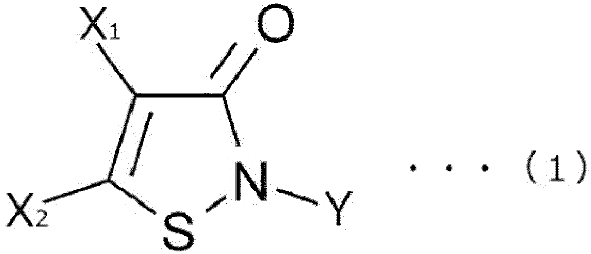 (In formula (1), Y is a hydrogen atom or an optionally substituted hydrocarbon group, and X₁ and X₂ are each, independently of each other, a hydrogen atom, a halogen atom, or an optionally substituted alkyl group having a carbon number of 1 to 6, or X₁ and X₂ may form an aromatic ring together. Note that in a case in which X₁ and X₂ do not form an aromatic ring together, X₁ and X₂ may be the same or different.)

The hydrocarbon group of Y in formula (1) may, for example, be an alkyl group having a carbon number of 1 to 10 (methyl group, etc.), an alkenyl group having a carbon number of 2 to 6 (vinyl group, allyl group, etc.), an alkynyl group having a carbon number of 2 to 6 (ethynyl group, propynyl group, etc.), a cycloalkyl group having a carbon number of 3 to 10 (cyclopentyl group, cyclohexyl group, etc.), an aryl group having a carbon number of 6 to 14 (phenyl group), or the like.

Moreover, some or all of the hydrogen atoms in the hydrocarbon group of Y may be replaced with a substituent. Examples of such substituents include a hydroxyl group, a halogen atom (for example, a chlorine atom, a fluorine atom, a bromine atom, or an iodine atom), a cyano group, an amino group, a carboxyl group, an alkoxy group having a carbon number of 1 to 4 (for example, a methoxy group or an ethoxy group), an aryloxy group having a carbon number of 6 to 10 (for example, a phenoxy group), an alkylthio group having a carbon number of 1 to 4 (for example, a methylthio group or an ethylthio group), and an arylthio group having a carbon number of 6 to 10 (for example, a phenylthio group). Note that in a case in which the hydrocarbon group of Y includes a plurality of substituents, each of the substituents may be the same or different.

Y in formula (1) is preferably a methyl group or a hydrogen atom, and is more preferably a hydrogen atom.

The halogen atom of X₁ and X₂ in formula (1) may, for example, be a fluorine atom, a chlorine atom, a bromine atom, or an iodine atom.

The alkyl group having a carbon number of 1 to 6 of X₁ and X₂ in formula (1) may, for example, be a methyl group, an ethyl group, a propyl group, an isopropyl group, a butyl group, an isobutyl group, a sec-butyl group, a tert-butyl group, a pentyl group, or the like. Note that some or all of the hydrogen atoms in these alkyl groups may be replaced with a substituent. Examples of such substituents include the same substituents as previously described as substituents in the hydrocarbon group of Y.

An aromatic ring formed by X₁ and X₂ in formula (1) may be a benzene ring or the like.

Hereinafter, a compound of formula (1) in which X₁ and X₂ form an aromatic ring together is referred to as an "aromatic ring-isothiazoline compound", whereas a compound of formula (1) in which X₁ and X₂ do not form an aromatic ring together is referred to as a "non-aromatic ring-isothiazoline compound".

In formula (1), it is preferable that X₁ and X₂ are each a hydrogen atom or form an aromatic ring together, and more preferable that X₁ and X₂ form an aromatic ring together (i.e., that the isothiazoline compound is an aromatic ring-isothiazoline compound) from a viewpoint of dispersing the conductive carbon even better in the conductive material paste and further inhibiting deposition of lithium metal at a negative electrode of a secondary battery.

### {Benzisothiazoline compound}

The aromatic ring-isothiazoline compound is preferably a benzisothiazoline compound in which X₁ and X₂ form a benzene ring as an aromatic ring and that has a structure indicated by the following formula (2). 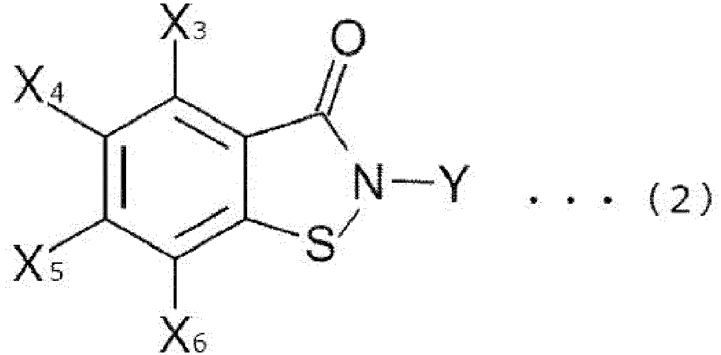 (In formula (2), Y is the same as for formula (1) and X₃ to X₆ are each any one of a hydrogen atom, a halogen atom, a hydroxyl group, a cyano group, an amino group, a carboxyl group, an alkyl group having a carbon number of 1 to 4, and an alkoxy group having a carbon number of 1 to 4. Note that X₃ to X₆ may each be the same or different.)

The halogen atom of X₃ to X₆ in formula (2) may be any of the same halogen atoms as given for X₁ and X₂ in formula (1).

The alkyl group having a carbon number of 1 to 4 in formula (2) may be a methyl group, an ethyl group, a propyl group, a butyl group, an isobutyl group, a sec-butyl group, or a tert-butyl group.

The alkoxy group having a carbon number of 1 to 4 in formula (2) may be a methoxy group, an ethoxy group, or the like.

It is preferable that Y and X₃ to X₆ in formula (2) are each a hydrogen atom.

### {Specific examples of isothiazoline compound}

Examples of isothiazoline compounds represented by formula (1) include non-aromatic ring-isothiazoline compounds such as 5-chloro-2-methyl-4-isothiazolin-3-one, 2-methyl-4-isothiazolin-3-one (MIT), 2-n-octyl-4-isothiazolin-3-one, 4,5-dichloro-2-n-octyl-4-isothiazolin-3-one, 2-ethyl-4-isothiazolin-3-one, 4,5-dichloro-2-cyclohexyl-4-isothiazolin-3-one, 5-chloro-2-ethyl-4-isothiazolin-3-one, and 5-chloro-2-t-octyl-4-isothiazolin-3-one; and aromatic ring-isothiazoline compounds such as 1,2-benzisothiazolin-3-one (BIT) and N-methyl-1,2-benzisothiazolin-3-one. One of these compounds may be used individually, or two or more of these compounds may be used in combination.

Of these compounds, 2-methyl-4-isothiazolin-3-one (MIT) and 1,2-benzisothiazolin-3-one (BIT) are preferable, and 1,2-benzisothiazolin-3-one (BIT) is particularly preferable from a viewpoint of dispersing the conductive carbon even better in the conductive material paste and even further inhibiting deposition of lithium metal at a negative electrode of a secondary battery.

### «Compound (b)»

The dispersant (B) preferably includes a compound (b) having a specific structure and molecular weight in addition to the isothiazoline compound described above. Through further inclusion of the compound (b) in the dispersant (B), aggregation, sedimentation, or the like of the conductive carbon can be inhibited even better, and the conductive carbon can be dispersed even better in the conductive material paste.

Note that the compound (b) is a compound that does not correspond to either of the dispersant (A) and the isothiazoline compound described above. Herein, in the case of a compound (b) that also corresponds to the previously described isothiazoline compound, that compound is considered to correspond to the isothiazoline compound rather than to the compound (b).

The compound (b) includes not fewer than one and not more than two aromatic hydrocarbon monocycles. The compound (b) preferably includes one aromatic hydrocarbon monocycle from a viewpoint of dispersing the conductive carbon even better in the conductive material paste. Accordingly, the compound (b) has an aromatic ring structure (aromatic hydrocarbon ring structure and/or aromatic heterocyclic structure) such as previously described in the "Dispersant (A)" section such that it includes not fewer than one and not more than two aromatic hydrocarbon monocycles per one molecule.

In addition, the compound (b) includes one functional group that includes either or both of a sulfur atom and a nitrogen atom. The functional group including either or both of a sulfur atom and a nitrogen atom that is included in the compound (b) may, for example, be any of the S/N-containing functional groups that were previously described in the "Dispersant (A)" section.

The molecular weight of the compound (b) is not less than 50 and not more than 500, is preferably 100 or more, and more preferably 150 or more, and is preferably 400 or less, and more preferably 300 or less. When the molecular weight of the compound (b) is 50 or more, sedimentation of the conductive carbon in the conductive material paste can be inhibited. On the other hand, when the molecular weight of the compound (b) is 500 or less, the conductive carbon can be dispersed even better in the conductive material paste.

The compound (b) is not specifically limited so long as it has the specific structure and molecular weight set forth above, and examples thereof include sodium toluenesulfonate, sodium benzenesulfonate, and sodium naphthalenesulfonate. Of these examples, it is preferable to use sodium toluenesulfonate and sodium naphthalenesulfonate from a viewpoint of dispersing the conductive carbon even better in the conductive material paste, and more preferable to use sodium toluenesulfonate. Note that one of these compounds may be used individually, or two or more of these compounds may be used in combination.

### «Relationship of isothiazoline compound and compound (b)»

In a case in which the dispersant (B) includes the compound (b), the mass ratio of the compound (b) relative to the isothiazoline compound (compound (b)/isothiazoline compound) in the dispersant (B) is preferably 1/10 or more, more preferably 1/5 or more, even more preferably 1/3 or more, and further preferably 1/1 or more, and is preferably 10/1 or less, more preferably 5/1 or less, and even more preferably 3/1 or less. When the mass ratio of the compound (b) relative to the isothiazoline compound (compound (b)/isothiazoline compound) is not less than any of the lower limits set forth above, the conductive carbon can be dispersed even better in the conductive material paste. On the other hand, when the mass ratio of the compound (b) relative to the isothiazoline compound (compound (b)/isothiazoline compound) is not more than any of the upper limits set forth above, the conductive paste has higher pH stability during storage.

### «Amount of dispersant (B)»

The presently disclosed conductive material paste preferably contains 0.01 parts by mass or more, more preferably 0.05 parts by mass or more, even more preferably 0.10 parts by mass or more, further preferably 0.50 parts by mass or more, and even further preferably 1.00 parts by mass or more of the dispersant (B) per 100 parts by mass of the conductive carbon, and preferably contains 25.00 parts by mass or less, more preferably 20.00 parts by mass or less, and even more preferably 3.00 parts by mass or less of the dispersant (B) per 100 parts by mass of the conductive carbon. When the amount of the dispersant (B) in the conductive material paste is not less than any of the lower limits set forth above, the amount of the dispersant (B) that is adsorbed to the surface of the conductive carbon increases, which can further inhibit sedimentation or the like of the conductive carbon and thereby enables even better dispersion of the conductive carbon in the conductive material paste. Moreover, when the amount of the dispersant (B) in the conductive material paste is not less than any of the lower limits set forth above, deposition of lithium metal at a negative electrode of a secondary battery can be further inhibited in a situation in which the negative electrode is formed using a slurry composition that contains the conductive material paste. On the other hand, when the amount of the dispersant (B) in the conductive material paste is not more than any of the upper limits set forth above, an excessive increase of viscosity of the conductive material paste can be inhibited.

### <Conductive carbon>

The conductive carbon is a carbon material for ensuring electrical contact among an electrode active material in an electrode mixed material layer. Note that the conductive carbon is a different component to the electrode active material contained in the presently disclosed slurry composition described further below.

The conductive carbon may, for example, be acetylene black, Ketjenblack^{®} (Ketjenblack is a registered trademark in Japan, other countries, or both), furnace black, carbon fiber, carbon flake, carbon nanofiber (for example, carbon nanotubes or vapor-grown carbon fiber), or the like. Of these examples, it is preferable to use carbon nanotubes (hereinafter, also abbreviated as "CNTs") from a viewpoint of further enhancing cycle characteristics of a secondary battery. Note that either of single-walled carbon nanotubes and multi-walled carbon nanotubes can be used as the carbon nanotubes.

The BET specific surface area of CNTs that can suitably be used as the conductive carbon is preferably 10 m²/g or more, more preferably 30 m²/g or more, and even more preferably 50 m²/g or more, and is preferably 400 m²/g or less, more preferably 350 m²/g or less, even more preferably 250 m²/g or less, and further preferably 200 m²/g or less. When the BET specific surface area of the CNTs is not less than any of the lower limits set forth above, deposition of lithium metal at a negative electrode of a secondary battery can be further inhibited in a situation in which the negative electrode is formed using a slurry composition that contains the conductive material paste. On the other hand, when the BET specific surface area of the CNTs is not more than any of the upper limits set forth above, a decomposition reaction of electrolyte solution can be inhibited, and cycle characteristics of a secondary battery can be further enhanced.

The average length of the CNTs is preferably 1.0 µm or more, more preferably 2.0 µm or more, even more preferably 5.0 µm or more, and further preferably 15.0 µm or more, and is preferably 60.0 µm or less, more preferably 40.0 µm or less, and even more preferably 30.0 µm or less. When the average length of the CNTs is not less than any of the lower limits set forth above, cycle characteristics of a secondary battery can be further enhanced because good conduction paths can be formed in an electrode mixed material layer. On the other hand, when the average length of the CNTs is not more than any of the upper limits set forth above, the CNTs serving as the conductive carbon can be dispersed even better in the conductive material paste.

The aspect ratio of the CNTs is preferably 50 or more, more preferably 100 or more, and even more preferably 150 or more, and is preferably 1,000 or less, more preferably 800 or less, even more preferably 500 or less, and further preferably 350 or less. When the aspect ratio of the CNTs is not less than any of the lower limits set forth above, cycle characteristics of a secondary battery can be further enhanced because good conduction paths can be formed in an electrode mixed material layer. On the other hand, when the aspect ratio of the CNTs is not more than any of the upper limits set forth above, the CNTs serving as the conductive carbon can be dispersed even better in the conductive material paste.

### <Solvent>

The solvent used in the conductive material paste can be either water or an organic solvent without any specific limitations. Examples of organic solvents that can be used include alcohols such as methanol, ethanol, n-propanol, isopropanol, n-butanol, isobutanol, t-butanol, pentanol, hexanol, heptanol, octanol, nonanol, decanol, and amyl alcohol, ketones such as acetone, methyl ethyl ketone, and cyclohexanone, esters such as ethyl acetate and butyl acetate, ethers such as diethyl ether, dioxane, and tetrahydrofuran, amide polar organic solvents such as N,N-dimethylformamide and N-methylpyrrolidone (NMP), and aromatic hydrocarbons such as toluene, xylene, chlorobenzene, orthodichlorobenzene, and paradichlorobenzene. One of these solvents may be used individually, or two or more of these solvents may be used as a mixture.

Of these examples, it is preferable to use water as the solvent from a viewpoint of slurry composition stability.

### <Other components>

Besides the components described above, components such as viscosity modifiers, reinforcing materials, antioxidants, and additives for electrolyte solution having a function of inhibiting electrolyte solution decomposition may be mixed into the conductive material paste, for example. These other components may be commonly known components.

### <Production method of conductive material paste>

The presently disclosed conductive material paste can be produced by mixing the above-described dispersant (A), dispersant (B), conductive carbon, solvent, and other optional components.

The mixing method is not specifically limited and may be a method using a typical mixing device such as a disper blade, a mill, or a kneader. Moreover, no specific limitations are placed on the mixing order during mixing.

For example, the presently disclosed conductive material paste can be produced by mixing the above-described dispersant (A), dispersant (B), conductive carbon, solvent, and other optional components while performing stirring using a disper blade, and subsequently using a bead mill to perform further mixing. The mixing using a disper blade can be implemented under conditions of a rotation speed of not less than 2,000 rpm and not more than 5,000 rpm and a stirring time of not less than 5 minutes and not more than 120 minutes, for example. Moreover, the mixing using a bead mill can be implemented using zirconia beads of 0.03 mm to 5 mm in diameter under conditions of a rotation speed of 100 rpm to 1,000 rpm and a processing time of 15 minutes to 3 hours, for example.

### <Viscosity of conductive material paste>

The viscosity of the conductive material paste at 25°C and 60 rpm is preferably 200 mPa·s or more, and more preferably 400 mPa·s or more, and is preferably 10,000 mPa·s or less, more preferably 8,000 mPa·s or less, and even more preferably 5,000 mPa·s or less. When the viscosity of the conductive material paste is within any of the ranges set forth above, the conductive material paste has better stability over time.

Note that the viscosity of the conductive material paste at 60 rpm (rotation speed) can be measured in accordance with JIS Z8803:1991 by a single cylinder rotary viscometer (also referred to as a "B-type viscometer"; spindle shape: 4).

The viscosity of the conductive material paste at 25°C and 60 rpm can be adjusted through the amount of the solvent added during mixing, the solid content concentration of the conductive material paste, and the types and amounts of the dispersant (A) and the dispersant (B).

### <Solid content concentration of conductive material paste>

The solid content concentration of the conductive material paste is preferably 1 mass% or more, and more preferably 3 mass% or more, and is preferably 50 mass% or less.

Setting the solid content concentration of the conductive material paste within any of the ranges set forth above enables even better dispersion of the conductive carbon in the conductive material paste.

### (Slurry composition for lithium ion secondary battery electrode)

The presently disclosed slurry composition for a lithium ion secondary battery electrode contains an electrode active material and the conductive material paste for a lithium ion secondary battery electrode set forth above, and may optionally further contain other components besides the electrode active material and the conductive material paste.

Accordingly, the presently disclosed slurry composition contains at least the components (dispersant (A), dispersant (B), conductive carbon, and solvent) that were contained in the conductive material paste set forth above.

The proportion constituted by the conductive carbon relative to all solid content in the slurry composition is preferably 0.05 mass% or more, and more preferably 0.10 mass% or more, and is preferably 2.0 mass% or less, and more preferably 1.2 mass% or less. When the proportion constituted by the conductive carbon relative to all solid content in the slurry composition is not less than any of the lower limits set forth above, good conduction paths can be formed in an electrode mixed material layer, and cycle characteristics of a secondary battery can be enhanced. On the other hand, when the proportion constituted by the conductive carbon relative to all solid content in the slurry composition is not more than any of the upper limits set forth above, the amount of the electrode active material per unit area of an electrode can be increased, and the capacity of a secondary battery can be increased.

The proportion constituted by the dispersant (A) relative to all solid content in the slurry composition is preferably 0.001 mass% or more, and more preferably 0.01 mass% or more, and is preferably 0.50 mass% or less, and more preferably 0.25 mass% or less. When the proportion constituted by the dispersant (A) relative to all solid content in the slurry composition is not less than any of the lower limits set forth above, sedimentation or the like of the conductive carbon can be further inhibited because the amount of the dispersant (A) adsorbed to the surface of the conductive carbon increases, which enables even better dispersion of the conductive carbon in the slurry composition. On the other hand, when the proportion constituted by the dispersant (A) relative to all solid content in the slurry composition is not more than any of the upper limits set forth above, an excessive increase of viscosity of the slurry composition can be inhibited through the formation of a sufficient steric protective layer at the surface of the conductive carbon.

The proportion constituted by the dispersant (B) relative to all solid content in the slurry composition is preferably 0.0005 mass% or more, and more preferably 0.002 mass% or more, and is preferably 0.15 mass% or less, and more preferably 0.1 mass% or less. When the proportion constituted by the dispersant (B) relative to all solid content in the slurry composition is not less than any of the lower limits set forth above, sedimentation or the like of the conductive carbon can be further inhibited because the amount of the dispersant (B) adsorbed to the surface of the conductive carbon increases, which enables even better dispersion of the conductive carbon in the slurry composition. On the other hand, when the proportion constituted by the dispersant (B) relative to all solid content in the slurry composition is not more than any of the upper limits set forth above, an excessive increase of viscosity of the slurry composition can be inhibited.

The presently disclosed slurry composition containing the conductive material paste set forth above has the conductive carbon dispersed well therein. Consequently, the presently disclosed slurry composition has excellent stability over time and can undergo long-term storage and long-term transport. Moreover, in a situation in which the presently disclosed slurry composition is used to form an electrode mixed material layer, the conductive carbon can be dispersed well in the electrode mixed material layer and good conduction paths can be formed, and thus battery characteristics such as cycle characteristics of a lithium ion secondary battery can be improved.

Furthermore, in a situation in which the presently disclosed slurry composition is used to form a negative electrode, deposition of lithium metal at the negative electrode of a secondary battery can be inhibited. Therefore, the presently disclosed slurry composition can suitably be used in production of a negative electrode for a lithium ion secondary battery. In other words, the presently disclosed slurry composition for a lithium ion secondary battery electrode is preferably a slurry composition for a lithium ion secondary battery negative electrode.

### <Electrode active material>

The electrode active material is a material that gives and receives electrons in an electrode of a lithium ion secondary battery. Moreover, the electrode active material is normally a material that can occlude and release lithium.

A positive electrode active material is used as the electrode active material in a case in which the presently disclosed slurry composition is a slurry composition for a lithium ion secondary battery positive electrode, whereas a negative electrode active material is used as the electrode active material in a case in which the presently disclosed slurry composition is a slurry composition for a lithium ion secondary battery negative electrode.

The positive electrode active material can be any known positive electrode active material without any specific limitations.

Examples of positive electrode active materials for lithium ion secondary batteries include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

Of these examples, it is preferable to use lithium-containing cobalt oxide (LiCoO₂), lithium-containing nickel oxide (LiNiO₂), a lithium-containing complex oxide of Co-Ni-Mn, a lithium-containing complex oxide of Ni-Co-Al, Li[Ni_{0.17}Li_{0.2}Co_{0.07}Mn_{0.56}]O₂, or LiNi_{0.5}Mn_{1.5}O₄ as a positive electrode active material from a viewpoint of improving battery capacity and the like of a lithium ion secondary battery.

The amount and particle diameter of the positive electrode active material are not specifically limited and may be the same as those of conventionally-used positive electrode active materials.

Examples of negative electrode active materials for lithium ion secondary batteries include carbon-based negative electrode active materials, metal-based negative electrode active materials, and negative electrode active materials that are combinations thereof.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of the silicon-based negative electrode active material include silicon (Si), a silicon-containing alloy, SiO, SiOₓ, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

The amount and particle diameter of the negative electrode active material are not specifically limited and may be the same as those of conventionally-used negative electrode active materials.

It is preferable to use a graphitic material and a silicon-based negative electrode active material in combination as a negative electrode active material from a viewpoint of increasing the capacity of a lithium ion secondary battery, and particularly preferable to use artificial graphite and SiOₓ in combination.

In a case in which a graphitic material and a silicon-based negative electrode active material are used in combination as a negative electrode active material, the proportion constituted by the graphitic material relative to all solid content in the slurry composition is preferably 50 mass% or more, and more preferably 60 mass% or more, and is preferably 90 mass% or less, and more preferably 80 mass% or less. When the proportion constituted by the graphitic material relative to all solid content in the slurry composition is not less than any of the lower limits set forth above, buffering action of the silicon-based negative electrode active material with respect to the graphitic material can be reduced, the capacity of a secondary battery can be increased, and cycle characteristics can be improved. On the other hand, when the proportion constituted by the graphitic material relative to all solid content in the slurry composition is not more than any of the upper limits set forth above, sufficient enhancement of cycle characteristics of a secondary battery can be ensured.

In the case described above, the proportion constituted by the silicon-based negative electrode active material relative to all solid content in the slurry composition is preferably 5 mass% or more, and more preferably 10 mass% or more, and is preferably 40 mass% or less, and more preferably 30 mass% or less. When the proportion constituted by the silicon-based negative electrode active material relative to all solid content in the slurry composition is not less than any of the lower limits set forth above, the amount of the electrode active material per unit area of an electrode can be increased, and the capacity of a secondary battery can be increased. On the other hand, when the proportion constituted by the silicon-based negative electrode active material relative to all solid content in the slurry composition is not more than any of the upper limits set forth above, sufficient enhancement of cycle characteristics of a secondary battery can be ensured.

### <Other components>

Besides the components described above, the presently disclosed slurry composition for a lithium ion secondary battery electrode may contain any of the components given as examples of other components in the "Conductive material paste for lithium ion secondary battery electrode" section.

Moreover, the presently disclosed slurry composition may contain a thickener and a binder as other components.

Although any commonly known thickener such as carboxymethyl cellulose (CMC) can be used as a thickener, it is preferable to use a hydroxyethyl acrylamide-acrylic acid-acrylamide copolymer from a viewpoint of improvement of cycle characteristics and slurry stability. The proportion constituted by the thickener relative to all solid content in the slurry composition is preferably 7.0 mass% or less, and more preferably 3.0 mass% or less from a viewpoint of suppressing an increase of battery resistance. Moreover, the proportion constituted by the thickener relative to all solid content in the slurry composition can be set as 0.5 mass% or more.

Although any known binder such as polyvinylidene fluoride (PVdF) can be used as a binder, it is preferable to use a particulate polymer such as an aliphatic conjugated diene/aromatic vinyl copolymer (polymer comprising 50 mass%, in total, of structural units derived from an aliphatic conjugated diene monomer and units derived from an aromatic vinyl monomer) from a viewpoint of reducing resistance to lithium ion movement in a battery. The proportion constituted by the binder relative to all solid content in the slurry composition is preferably 7.0 mass% or less, and more preferably 3.0 mass% or less from a viewpoint of suppressing an increase of battery resistance. Moreover, the proportion constituted by the binder relative to all solid content in the slurry composition can be set as 0.5 mass% or more.

Also, the presently disclosed slurry composition may contain a solvent that is optionally added during production of the slurry composition in addition to the components described above. Any of the same solvents that can be contained in the conductive material paste can be used as this additional solvent.

### <Production method of slurry composition>

The mixing method when the above-described electrode active material and the optional other components and additional solvent are mixed with the conductive material paste to obtain the presently disclosed slurry composition is not specifically limited and may, for example, be a method using a typical mixing device such as a disper blade, a mill, or a kneader.

In production of the slurry composition, deterioration of stability over time of the slurry composition can be inhibited by producing a conductive material paste containing the conductive carbon and dispersants and subsequently adding and mixing the electrode active material with the conductive material paste, rather than mixing the electrode active material at the same time as the conductive carbon and the dispersants by mixing all at once. Moreover, the dispersion state of the conductive carbon can be homogenized compared to that in production by mixing all at once, and differences between production batches of the slurry composition in terms of viscosity and concentration can be limited to low levels. This facilitates industrial production of slurry compositions of roughly equivalent viscosity and solid content.

The solid content concentration of the slurry composition is preferably not less than 30 mass% and not more than 90 mass% from a viewpoint of ensuring coatability on a current collector.

Note that a ratio of the amount (in terms of solid content) of the conductive material paste and the amount of the electrode active material can be adjusted as appropriate such that the proportion constituted by each component (conductive carbon, etc.) relative to all solid content in the slurry composition is within any of the specific ranges that were described above.

### (Electrode for lithium ion secondary battery)

A feature of the presently disclosed electrode for a lithium ion secondary battery is that it includes an electrode mixed material layer formed using the slurry composition for a lithium ion secondary battery electrode set forth above. More specifically, the presently disclosed electrode for a lithium ion secondary battery includes a current collector and an electrode mixed material layer formed on the current collector, wherein the electrode mixed material layer is formed using the slurry composition for a lithium ion secondary battery electrode set forth above. Accordingly, the electrode mixed material layer included in the presently disclosed electrode for a lithium ion secondary battery contains at least the electrode active material and solid components (dispersant (A), dispersant (B), and conductive carbon) that were contained in the conductive material paste. The preferred proportional content of each component in the electrode mixed material layer is the same as for the proportion constituted by each component relative to all solid content in the slurry composition.

As a result of including an electrode mixed material layer formed using the slurry composition for a lithium ion secondary battery electrode set forth above, the presently disclosed electrode can cause a secondary battery to adequately display battery characteristics such as cycle characteristics.

The presently disclosed electrode may be a positive electrode for a lithium ion secondary battery or may be a negative electrode for a lithium ion secondary battery. In particular, the presently disclosed electrode can suitably be used as a negative electrode for a lithium ion secondary battery because in a case in which the presently disclosed electrode is used as a negative electrode for a lithium ion secondary battery, deposition of lithium metal at the negative electrode can be inhibited.

### <Production method of electrode for lithium ion secondary battery>

The presently disclosed electrode for a lithium ion secondary battery is produced, for example, through a step of applying the slurry composition set forth above onto at least one side of a current collector (application step) and a step of drying the slurry composition that has been applied onto at least one side of the current collector to form an electrode mixed material layer on the current collector (drying step).

### «Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### «Drying step»

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode for a lithium ion secondary battery that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector.

Furthermore, in a case in which the electrode mixed material layer contains a curable polymer, the polymer is preferably cured after the electrode mixed material layer has been formed.

### (Lithium ion secondary battery)

Features of the presently disclosed lithium ion secondary battery are that it includes a positive electrode, a negative electrode, a separator, and an electrolyte solution, and that at least one of the positive electrode and the negative electrode is the presently disclosed electrode for a lithium ion secondary battery set forth above. As a result of including the presently disclosed electrode for a lithium ion secondary battery, the presently disclosed lithium ion secondary battery has excellent electrical characteristics such a cycle characteristics.

### <Electrodes>

Examples of electrodes other than the presently disclosed electrode for a lithium ion secondary battery set forth above that can be used in the presently disclosed lithium ion secondary battery include known electrodes that are used in production of secondary batteries without any specific limitations. Specifically, an electrode obtained by forming an electrode mixed material layer on a current collector by a known production method may be used as an electrode other than the electrode for a lithium ion secondary battery set forth above.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Moreover, known additives such as fluoroethylene carbonate (FEC) and vinylene carbonate (VC) may be added to the electrolyte solution.

### <Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material in the secondary battery, and consequently increases the volumetric capacity.

### <Production method of secondary battery>

The presently disclosed secondary battery can be produced by, for example, stacking the positive electrode and the negative electrode with the separator in-between, performing rolling, folding, or the like of the resultant laminate as necessary in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer produced through copolymerization of a plurality of types of monomers, the mass ratio of structural units (monomer units) derived from a given monomer among the overall polymer is, unless otherwise specified, normally the same as the mass ratio (charging ratio) of the given monomer among all monomers used in polymerization of the polymer.

In the examples and comparative examples, the following methods were used to evaluate the average number of aromatic hydrocarbon monocycles per one molecule of a dispersant (A), the average number of functional groups including either or both of a sulfur atom and a nitrogen atom per one molecule of a dispersant (A), the weight-average molecular weight of a dispersant (A), the viscosity of a 20 mass% aqueous solution of a dispersant (A), the inhibition of viscosity increase of a conductive material paste, the inhibition of sedimentation of conductive carbon in a conductive material paste, the peel strength of an electrode (negative electrode), the inhibition of deposition of lithium metal, and the cycle characteristics of a secondary battery.

### <Average number of aromatic hydrocarbon monocycles per one molecule of dispersant (A)>

The average number of aromatic hydrocarbon monocycles per one molecule of a dispersant (A) was determined by ¹H-NMR measurement. Specifically, 30 mg of the dispersant (A) was dissolved in 1 mL of a measurement solvent (CDCl₃), ¹H-NMR measurement was performed, and the average number of aromatic hydrocarbon monocycles per one molecule of the dispersant (A) was determined from the area intensity of a peak attributed to protons of aromatic hydrocarbon origin.

### <Average number of functional groups including either or both of a sulfur atom and a nitrogen atom per one molecule of dispersant (A)>

The average number of functional groups including either or both of a sulfur atom and a nitrogen atom (S/N-containing functional groups) per one molecule of a dispersant (A) was determined by ¹³C-NMR measurement. Specifically, 30 mg of the dispersant (A) was dissolved in 1 mL of a measurement solvent (CDCl₃), ¹³C-NMR measurement was performed, and the average number of S/N-containing functional groups per one molecule of the dispersant (A) was determined from the area intensity of a peak attributed to sulfur atoms or nitrogen atoms.

### <Weight-average molecular weight of dispersant A>

The weight-average molecular weight of a dispersant (A) was measured by gel permeation chromatography (GPC). First, the dispersant (A) was added to approximately 5 mL of eluent to give a solid content concentration of approximately 0.5 g/L and was gradually dissolved at room temperature. Once dissolution of the dispersant (A) was visually confirmed, the solution was gently filtered using a 0.45 µm filter to produce a measurement sample. This measurement sample was then used to perform GPC measurement. The weight-average molecular weight of the dispersant (A) was calculated as a standard substance-equivalent value based on a calibration curve prepared through results of GPC measurement using a standard substance.

Note that the GPC measurement conditions were as follows.

### «Measurement conditions»

Column: Three columns (Shodex OHpak SB-G, SB-807HQ, and SB-806MHQ; each produced by Showa Denko K.K.) linked in series
Eluent: 0.1 M tris buffer solution (0.1 M of potassium chloride added)
Flow rate: 0.5 mL/min
Dispersant (A) measurement sample concentration: 0.5 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Viscosity of 20 mass% aqueous solution of dispersant (A)>

An aqueous solution of a dispersant (A) that had been adjusted to a concentration of 20 mass% was left at rest in a thermostatic tank having a temperature of 25°C for 2 hours and was then measured using a B-type viscometer under conditions of a spindle rotation speed of 60 rpm and a timing of 60 seconds after the start of spindle rotation.

### <Inhibition of viscosity increase of conductive material paste>

In each example or comparative example, the viscosity η1 of a conductive material paste straight after production thereof was measured using a B-type viscometer under conditions of a temperature of 25°C, a spindle rotation speed of 60 rpm, and a timing of 60 seconds after the start of spindle rotation.

Next, the paste was stored at rest at 25°C for 12 months, viscosity measurement was subsequently performed by the same method as described above, and the measured viscosity was taken to be η2.

A viscosity ratio η3 was determined by a formula η3 = η2/η1, and viscosity increase of the conductive material paste was evaluated by the following standard. Note that a value for the viscosity ratio η3 that is closer to 1.0 indicates better inhibition of viscosity increase of the paste.
A: Viscosity ratio η3 of less than 1.1
B: Viscosity ratio η3 of not less than 1.1 and less than 1.5
C: Viscosity ratio η3 of not less than 1.5 and less than 2.0
D: Viscosity ratio η3 of 2.0 or more

### <Inhibition of sedimentation of conductive carbon in conductive material paste>

In each example or comparative example, a conductive material paste (solid content concentration: 5.00 mass%) was loaded into a dedicated cell tube straight after production thereof, and the mouth of the cell tube was tightly sealed. Centrifugal separation was then performed under the following conditions.
Centrifuge: CS150NX (product name) produced by Hitachi Koki Co., Ltd.
Rotation speed: 110,000 rpm
Centrifugal separation time: 60 minutes
Temperature: 25°C

The following distances L1 and L2 were measured by a ruler before and after the centrifugal separation.
LI: Distance from liquid surface of conductive material paste to bottom surface of cell tube inside cell tube before centrifugal separation
L2: Distance from upper surface of supernatant transparent portion of conductive material paste (i.e., liquid surface) to lower surface thereof (boundary surface with sedimented portion) inside cell tube after centrifugal separation

The value of L2/L1 was calculated, and inhibition of sedimentation of conductive carbon in the conductive material paste was evaluated by the following standard. Note that a smaller value for L2/L1 indicates that sedimentation of conductive carbon in the conductive material paste is inhibited and that conductive carbon is dispersed well.
A: Less than 0.1
B: Not less than 0.1 and less than 0.2
C: Not less than 0.2 and less than 0.5
D: 0.5 or more

Note that when a particulate polymer (styrene-butadiene copolymer; adjusted to aqueous solution having solid content concentration of 5%) used as a binder in the present examples was subjected to centrifugal separation at the same time and was evaluated in the same manner as described above as a reference, the evaluation result was D.

### <Peel strength of electrode (negative electrode)>

A negative electrode produced in each example or comparative example was cut to a rectangle of 1 cm in width by 10 cm in length to obtain a test specimen. This test specimen was fixed in place with the surface of the negative electrode mixed material layer facing upward. Cellophane tape was affixed to the surface of the negative electrode mixed material layer of the test specimen that had been fixed in place, and the stress when the cellophane tape was peeled off by pulling the cellophane tape from one end of the test specimen at a speed of 50 mm/min in a direction at 180° was measured. Five measurements were performed in the same manner, and the average value thereof was taken to be the peel strength and was evaluated by the following standard.
A: Peel strength of 10 N/m or more
B: Peel strength of not less than 8 N/m and less than 10 N/m
C: Peel strength of not less than 4 N/m and less than 8 N/m
D: Peel strength of less than 4 N/m

### <Inhibition of deposition of lithium metal>

A laminate cell-type lithium ion secondary battery produced in each example or comparative example was left at rest in a 25°C environment for 24 hours after injection of electrolyte solution and was subsequently subjected to a charge/discharge operation of charging to a cell voltage of 4.35 V and discharging to a cell voltage of 2.75 V by a 0.1C constant-current method.

Next, 5 cycles of a charge/discharge operation of charging to a cell voltage of 4.35 V by a 1.5C constant-current method (CCCV charging, 0.05C cut-off) and discharging to a cell voltage of 2.75 V at the same rate (CC discharging) were performed in a -10°C environment. Finally, the lithium ion secondary battery was charged to a cell voltage of 4.35 V by a 0.2C constant-current method in a 25°C environment.

After this operation, the cell of the lithium ion secondary battery was dismantled to remove the negative electrode, and the proportion occupied by sections where lithium metal was deposited (Li metal deposition sections) among the entire surface of the negative electrode was calculated by image processing. A smaller proportion occupied by Li metal deposition sections among the entire negative electrode surface indicates that deposition of lithium metal at the negative electrode of the lithium ion secondary battery is inhibited.
A: Proportion occupied by Li metal deposition sections is less than 3% of entire negative electrode surface
B: Proportion occupied by Li metal deposition sections is not less than 3% and less than 10% of entire negative electrode surface
C: Proportion occupied by Li metal deposition sections is not less than 10% and less than 30% of entire negative electrode surface
D: Proportion occupied by Li metal deposition sections is 30% or more of entire negative electrode surface

### <Cycle characteristics of secondary battery>

A laminate cell-type lithium ion secondary battery produced in each example or comparative example was left at rest in a 25°C environment for 24 hours after injection of electrolyte solution, was subsequently subjected to a charge/discharge operation of charging to a cell voltage of 4.35 V and discharging to a cell voltage of 2.75 V by a 0.1C constant-current method, and the initial capacity C0 was measured. Charging and discharging in which the lithium ion secondary battery was charged to a cell voltage of 4.35 V and discharged to a cell voltage of 2.75 V by a 1.0C constant-current method was then repeated in a 45°C environment, and the capacity C2 after 100 cycles was measured. A capacity maintenance rate C3 was calculated by a formula: C3 (%) = (C2/C0) × 100. A larger value for C3 indicates that the lithium ion secondary battery has better cycle characteristics.
A: Capacity maintenance rate C3 of 96% or more
B: Capacity maintenance rate C3 of not less than 90% and less than 96%
C: Capacity maintenance rate C3 of not less than 80% and less than 90%
D: Capacity maintenance rate C3 of less than 80%

### (Example 1)

### <Production of dispersant (A) by polymerization method>

A 1 L flask made of glass was charged with 100 parts of deionized water, 500 parts of tertiary butanol, and 200 parts of toluene, heating was performed to a temperature of 60°C, and the inside of the flask was purged with nitrogen gas at a flow rate of 100 mL/min. Next, a mixture obtained by mixing 21 parts of 1-vinylnaphthalene as a monomer including an aromatic hydrocarbon monocycle and 79 parts of allyl sulfonic acid as a monomer including a sulfur atom-containing functional group was injected into the flask. The mixture was subjected to nitrogen bubbling (under conditions of 40 minutes at a flow rate of 1 L/min), and then 500 parts (25 parts in terms of solid content of V-70) of a 5% acetonitrile solution of 2,2'-azobis(2,4-dimethyl-4-methoxy)valeronitrile (V-70 produced by FUJIFILM Wako Pure Chemical Corporation) as a polymerization initiator was added into the flask so as to initiate a polymerization reaction.

Once 2 hours had passed from the start of the reaction, the temperature was raised to 75°C and was maintained thereat while causing the polymerization reaction to progress. Once 4 hours had passed from addition of the polymerization initiator, the flask was opened in air and the polymerization reaction was terminated. The produced polymer was caused to precipitate in acetone. With respect to the obtained precipitate, a 10% aqueous solution of sodium hydroxide was added and the pH was adjusted to 8.0 under stirring at a temperature of 80°C for 6 hours to yield a sodium salt of the polymer as a dispersant (A).

The obtained dispersant (A) was used to measure the average number of aromatic hydrocarbon monocycles per one molecule of the dispersant (A), the average number of S/N-containing functional groups per one molecule of the dispersant (A), the weight-average molecular weight of the dispersant (A), and the viscosity of a 20 mass% aqueous solution of the dispersant (A). The results are shown in Table 1.

### <Production of thickener>

A 1 L flask made of glass was charged with 789 parts of deionized water, heating was performed to a temperature of 40°C, and the inside of the flask was purged with nitrogen gas at a flow rate of 100 mL/min. Next, 45 parts of acrylamide as an amide group-containing monomer, 25 parts of acrylic acid as a carboxyl group-containing monomer, and 30 parts of hydroxyethyl acrylamide as a hydroxyl group-containing monomer were mixed and were injected into the flask. Thereafter, 8.9 parts of a 2.5% aqueous solution of potassium persulfate as a polymerization initiator was added into the flask by a syringe. Once 15 minutes had passed from addition of the polymerization initiator, 22.2 parts of a 2.0% aqueous solution of tetramethylethylenediamine as a polymerization accelerator was added by a syringe, and a polymerization reaction was initiated.

Once 4 hours had passed from addition of the polymerization initiator, 4.4 parts of a 2.5% aqueous solution of potassium persulfate as a polymerization initiator was supplementarily added into the flask, 11.1 parts of a 2.0% aqueous solution of tetramethylethylenediamine as a polymerization accelerator was supplementarily added, and the temperature was raised to 60°C and was maintained thereat while causing the polymerization reaction to progress. Once 3 hours had passed from supplementary addition of the polymerization initiator, the flask was opened in air, and the polymerization reaction was terminated. With respect to the obtained polymer, an 8% aqueous solution of lithium hydroxide was added and the pH was adjusted to 8.0 under stirring at a temperature of 80°C for 6 hours so as to yield a hydroxyethyl acrylamide-acrylic acid-acrylamide copolymer as a thickener.

### <Production of binder>

A 5 MPa pressure-resistant vessel A equipped with a stirrer was charged with 3.15 parts of styrene as an aromatic vinyl monomer, 1.66 parts of 1,3-butadiene as an aliphatic conjugated diene monomer, 0.1 parts of itaconic acid as another monomer, 0.2 parts of sodium lauryl sulfate as an emulsifier, 20 parts of deionized water, and 0.03 parts of potassium persulfate as a polymerization initiator. These materials were sufficiently stirred to obtain a monomer composition 1, and were then heated to 60°C to initiate polymerization (first stage polymerization) and were caused to react for 6 hours to yield seed particles.

After this reaction, the pressure-resistant vessel A was heated to 75°C while a monomer composition 2 was obtained in a separate vessel B by mixing 56.85 parts of styrene as an aromatic vinyl monomer, 33.84 parts of 1,3-butadiene as an aliphatic conjugated diene monomer, 3.4 parts of itaconic acid as another monomer, 0.25 parts of tert-dodecyl mercaptan as a chain transfer agent, and 0.35 parts of sodium lauryl sulfate as an emulsifier, and then addition of the monomer composition 2 from the vessel B to the pressure-resistant vessel A was initiated, and, simultaneously thereto, addition of 1 part of potassium persulfate as a polymerization initiator to the pressure-resistant vessel A was initiated so as to initiate second stage polymerization.

Once 4 hours had passed from the start of the second stage polymerization (once 70% of the entire monomer composition had been added), 1 part of 2-hydroxyethyl acrylate was added into the pressure-resistant vessel A over 1.5 hours.

In other words, 60 parts of styrene as an aromatic vinyl monomer, 35.5 parts of 1,3-butadiene as an aliphatic conjugated diene monomer, and 3.5 parts of itaconic acid and 1 part of 2-hydroxyethyl acrylate as other monomers, in total, were used in the polymerization reaction for production of a binder.

Addition of the total amount of the monomer composition 2 was completed once 5.5 hours had passed from the start of the second stage polymerization, and the reaction was subsequently continued for 6 hours under heating to 85°C.

Cooling was performed to quench the reaction at the point at which the polymerization conversion rate reached 97%. The resultant mixture containing a polymer was adjusted to pH 8 through addition of 5% sodium hydroxide aqueous solution. Unreacted monomer was subsequently removed through thermal-vacuum distillation. Thereafter, cooling was performed to yield a particulate polymer (styrene-butadiene copolymer) as a binder.

### <Production of conductive material paste>

A conductive material paste for a lithium ion secondary battery was produced by adding 100 parts of multi-walled carbon nanotubes (BET specific surface area: 200 m²/g; average length: 15 µm; aspect ratio: 350) as conductive carbon, 10 parts (in terms of solid content) of the dispersant (A) obtained as described above, 0.50 parts (in terms of solid content) of 1,2-benzisothiazolin-3-one (isothiazoline compound) as a dispersant (B), 0.50 parts (in terms of solid content) of sodium p-toluenesulfonate (compound (b)) as a dispersant (B), and an appropriate amount of deionized water as a solvent, stirring these materials using a disper blade (3,000 rpm, 60 minutes), and then mixing these materials at a circumferential speed of 8 m/s for 1 hour using a bead mill in which zirconia beads of 1 mm in diameter were used. The conductive material paste had a viscosity of 500 mPa·s at a temperature of 25°C and 60 rpm as measured using a B-type viscometer. Moreover, the solid content concentration of the conductive material paste was 5.0 mass%.

The obtained conductive material paste was used to evaluate the inhibition of viscosity increase of the conductive material paste and the inhibition of sedimentation of the conductive carbon in the conductive material paste. The results are shown in Table 1.

### <Production of slurry composition>

A planetary mixer equipped with a disper blade was charged with 67.55 parts of artificial graphite (volume-average particle diameter: 24.5 µm; specific surface area: 4 m²/g), which is a graphitic material, and 28.95 parts of SiOₓ, which is a silicon-based negative electrode active material, as electrode active materials (negative electrode active materials), and then 2.0 parts in terms of solid content of the thickener obtained as described above was further added thereto. These materials were adjusted to a solid content concentration of 58% with deionized water and were mixed for 60 minutes. Next, 0.5 parts (in terms of multi-walled carbon nanotubes) of the conductive material paste obtained as described above was added and mixed. The solid content concentration was further adjusted to 50% with deionized water, 1.0 parts (in terms of solid content) of the binder obtained as described above was added, and 15 minutes of mixing was performed to yield a mixture. The mixture was subjected to a defoaming process under reduced pressure to obtain a slurry composition for a lithium ion secondary battery negative electrode (solid content concentration: 48%) having good fluidity.

### <Production of negative electrode>

The slurry composition for a lithium ion secondary battery negative electrode described above was applied onto copper foil (current collector) of 18 µm in thickness by a comma coater such as to have a thickness after drying of 105 µm and a coating weight of 10 mg/cm². The copper foil with the slurry composition applied thereon was conveyed inside an oven having a temperature of 75°C for 2 minutes and an oven having a temperature of 120°C for 2 minutes at a speed of 0.5 m/min so as to dry the slurry composition on the copper foil and thereby obtain a negative electrode web. The negative electrode web was rolled by roll pressing to obtain a negative electrode having a negative electrode mixed material layer thickness of 80 µm.

The obtained negative electrode was used to measure and evaluate the peel strength of an electrode (negative electrode). The result is shown in Table 1.

### <Production of positive electrode>

A slurry composition for a lithium ion secondary battery positive electrode (not corresponding to the presently disclosed slurry composition for a secondary battery) was obtained by adding 95 parts of LiCoO₂ having a spinel structure as a positive electrode active material, 3 parts in terms of solid content of PVDF (polyvinylidene fluoride) as a binder for a positive electrode mixed material layer, 2 parts of acetylene black as a conductive material, and 20 parts of N-methylpyrrolidone as a solvent into a planetary mixer and mixing these materials.

The obtained slurry composition for a lithium ion secondary battery positive electrode was applied onto aluminum foil (current collector) of 20 µm in thickness by a comma coater such as to have a thickness after drying of approximately 100 µm. The aluminum foil with the slurry composition for a lithium ion secondary battery positive electrode applied thereon was conveyed inside an oven having a temperature of 60°C for 2 minutes and an oven having a temperature of 120°C for 2 minutes at a speed of 0.5 m/min so as to dry the slurry composition for a lithium ion secondary battery positive electrode on the aluminum foil and thereby obtain a positive electrode web. The positive electrode web was rolled by roll pressing to obtain a positive electrode having a positive electrode mixed material layer thickness of 70 µm.

### <Preparation of separator>

A separator made of a single layer of polypropylene (width 65 mm, length 500 mm, thickness 25 µm; produced by dry method; porosity: 55%) was prepared. The separator was cut out as a square of 5 cm × 5 cm and was used in a lithium ion secondary battery described below.

### <Production of lithium ion secondary battery>

An aluminum packing case was prepared as a battery case. The positive electrode obtained as described above was cut out as a 4 cm × 4 cm square and was arranged such that the surface at the current collector-side thereof was in contact with the aluminum packing case. Next, the square separator prepared as described above was arranged on the surface of the positive electrode mixed material layer of the positive electrode. In addition, the negative electrode obtained as described above was cut out as a 4.2 cm × 4.2 cm square and was arranged on the separator such that the surface at the negative electrode mixed material layer-side thereof faced toward the separator. Thereafter, the aluminum packing case was filled with a LiPF₆ solution of 1.0 M in concentration (solvent: mixed solvent of ethylene carbonate (EC)/diethyl carbonate (DEC) = 1/2 (volume ratio); containing 2 volume% (solvent ratio) of each of fluoroethylene carbonate (FEC) and vinylene carbonate (VC) as additives) as an electrolyte solution. The aluminum packing case was then closed by heat sealing at 150°C to tightly seal an opening of the aluminum packing, and thereby produce a laminate cell-type lithium ion secondary battery.

The obtained lithium ion secondary battery was used to evaluate the inhibition of deposition of lithium metal and the cycle characteristics of a secondary battery. The results are shown in Table 1.

### (Examples 2 to 6, 8 to 10, and 17, and Comparative Examples 1 to 4)

A dispersant (A), a thickener, a binder, a conductive material paste, a negative electrode, a positive electrode, a separator, and a lithium ion secondary battery were produced in the same way as in Example 1 with the exception that, in production of the dispersant (A) of Example 1, the amounts and types of used monomers and the amount of the polymerization initiator were changed as indicated in Table 3. Various measurements and evaluations were performed in the same way as in Example 1. The results are shown in Tables 1 and 2.

### (Example 7)

A thickener, a binder, a conductive material paste, a negative electrode, a positive electrode, a separator, and a lithium ion secondary battery were produced in the same way as in Example 1 with the exception that, in production of the conductive material paste of Example 1, 10 parts (in terms of solid content) of a dispersant (A) produced by a condensation method described below was used instead of 10 parts (in terms of solid content) of the dispersant (A) produced by the polymerization method. Various measurements and evaluations were performed in the same way as in Example 1. The results are shown in Table 1.

### <Production of dispersant (A) by condensation method>

A reactor was charged with 1 mol of naphthalene, heating was performed to 120°C, and then 1.15 mol (in terms of sulfuric acid) of 25% fuming sulfuric acid was added dropwise while performing heating to 160°C and carrying out a reaction at 160°C for 3 hours to yield naphthalene sulfonic acid as a monomer including both an aromatic hydrocarbon monocycle and a S-containing functional group. The obtained naphthalene sulfonic acid was cooled to 90°C, 3 mol of water was added thereto, 1.0 mol (in terms of formaldehyde) of 37% formalin, which is an aqueous solution containing another monomer (formaldehyde), was added dropwise at 90°C while performing heating to 100°C and carrying out a reaction for 25 hours, and then water was added to yield a condensate. The condensate was cooled to 40°C, was adjusted to pH 9 through addition of an equimolar amount of an aqueous solution of 24% sodium hydroxide and 24% potassium hydroxide, and was adjusted to a solid content concentration of 40% to yield a dispersant (A) as a condensate produced by a condensation method.

The obtained dispersant (A) was used to measure the average number of aromatic hydrocarbon monocycles per one molecule of the dispersant (A), the average number of functional groups including either or both of a sulfur atom and a nitrogen atom per one molecule of the dispersant (A), the weight-average molecular weight of the dispersant (A), and the viscosity of a 20 mass% aqueous solution of the dispersant (A). The results are shown in Table 1.

### (Examples 11 and 12)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, the used amount (in terms of solid content) of the dispersant (A) was changed as indicated in Table 1. Various measurements and evaluations were performed in the same way as in Example 1. The results are shown in Table 1.

### (Examples 13 and 14)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, the amounts (in terms of solid content) of the isothiazoline compound and the compound (b) used as the dispersant (B) were changed as indicated in Table 1. Various measurements and evaluations were performed in the same way as in Example 1. The results are shown in Table 1.

### (Example 15)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, only 0.5 parts (in terms of solid content) of 1,2-benzisothiazolin-3-one, which is an isothiazoline compound, was used as the dispersant (B) without using the compound (b) (sodium p-toluenesulfonate). Various measurements and evaluations were performed in the same way as in Example 1. The results are shown in Table 1.

### (Example 16)

A dispersant (A), a thickener, a binder, a conductive material paste, a negative electrode, a positive electrode, a separator, and a lithium ion secondary battery were produced in the same way as in Example 7 with the exception that, in production of the conductive material paste of Example 7, only 0.5 parts (in terms of solid content) of 1,2-benzisothiazolin-3-one, which is an isothiazoline compound, was used as the dispersant (B) without using the compound (b) (sodium p-toluenesulfonate). Various measurements and evaluations were performed in the same way as in Example 7. The results are shown in Table 1.

### (Examples 18 to 23)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, the BET specific surface area, average length, and aspect ratio of the used multi-walled CNTs were changed as indicated in Table 2. Various measurements and evaluations were performed in the same way as in Example 1. The results are shown in Table 2.

### (Example 24)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, 100 parts of carbon black (volume-average particle diameter D50: 20 nm; BET specific surface area: 60 m²/g) was used instead of 100 parts of multi-walled CNTs as the conductive carbon. Various measurements and evaluations were performed in the same way as in Example 1. The results are shown in Table 2.

### (Comparative Example 5)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1. neither the compound (b) (sodium p-toluenesulfonate) nor the isothiazoline compound (1,2-benzisothiazolin-3-one) was used as the dispersant (B). Various measurements and evaluations were performed in the same way as in Example 1. The results are shown in Table 2.

### (Comparative Example 6)

A dispersant (A), a thickener, a binder, a conductive material paste, a negative electrode, a positive electrode, a separator, and a lithium ion secondary battery were produced in the same way as in Example 1 with the exception that, in production of the conductive material paste of Example 1, only 0.50 parts (in terms of solid content) of sodium p-toluenesulfonate, which is a compound (b), was used as the dispersant (B) without using the isothiazoline compound (1,2-benzisothiazolin-3-one). Various measurements and evaluations were performed in the same way as in Example 1. The results are shown in Table 2.

### (Comparative Example 7)

A thickener, a binder, a conductive material paste, a negative electrode, a positive electrode, a separator, and a lithium ion secondary battery were produced in the same way as in Example 1 with the exception that, in production of the conductive material paste of Example 1, 10 parts (in terms of solid content) of a dispersant (A) in which the average number of aromatic hydrocarbon monocycles per one molecule exceeded the specific range and that did not include a S/N-containing functional group, which was produced as described below, was used instead of 10 parts (in terms of solid content) of the dispersant (A) including specific numbers of aromatic hydrocarbon monocycles and S/N-containing functional groups as averages per one molecule. Various measurements and evaluations were performed in the same way as in Example 1. The results are shown in Table 2.

### <Production of dispersant (A) in which average number of aromatic hydrocarbon monocycles per one molecule exceeds specific range and not including S/N-containing functional group>

A reactor equipped with a stirrer was charged with 93.4 parts of butanol and was subjected to purging with nitrogen gas. The inside of the reactor was heated to 110°C, and a mixture of 30.0 parts of styrene as a monomer including an aromatic hydrocarbon monocycle, 70.0 parts of acrylic acid as another monomer, and 4.5 parts of dimethyl 2,2-azobis(isobutyrate) (V-601 produced by FUJIFILM Wako Pure Chemical Corporation) as a polymerization initiator was added dropwise over 2 hours to carry out a polymerization reaction. Once this dropwise addition was complete, the reaction was carried out for a further 3 hours at 110°C, 0.5 parts of the polymerization initiator described above was further added, and the reaction was continued for 1 hour at 110°C to yield a solution containing a polymer as a dispersant (A).

The obtained dispersant (A) was used to measure the average number of aromatic hydrocarbon monocycles per one molecule of the dispersant (A), the average number of functional groups including either or both of a sulfur atom and a nitrogen atom per one molecule of the dispersant (A), the weight-average molecular weight of the dispersant (A), and the viscosity of a 20 mass% aqueous solution of the dispersant (A). The results are shown in Table 2.

### (Comparative Example 8)

A thickener, a binder, a conductive material paste, a negative electrode, a positive electrode, a separator, and a lithium ion secondary battery were produced in the same way as in Example 1 with the exception that, in production of the conductive material paste of Example 1, 10 parts (in terms of solid content) of a dispersant (A) in which the average numbers of aromatic hydrocarbon monocycles and S/N-containing functional groups per one molecule exceeded the specific ranges, which was produced as described below, was used instead of 10 parts (in terms of solid content) of the dispersant (A) including specific numbers of aromatic hydrocarbon monocycles and S/N-containing functional groups as averages per one molecule. Various measurements and evaluations were performed in the same way as in Example 1. The results are shown in Table 2.

### <Production of dispersant (A) in which average numbers of aromatic hydrocarbon monocycles and S/N-containing functional groups per one molecule exceed specific ranges>

A reactor equipped with a stirrer was charged with 200.0 parts of n-butanol and was subjected to purging with nitrogen gas. The inside of the reactor was heated to 110°C, and a mixture of 100.0 parts of styrene as a monomer including an aromatic hydrocarbon monocycle, 60.0 parts of 2-acrylamido-2-methylpropyl sulfonic acid, 40.0 parts of dimethylaminoethyl methacrylate, and 12.0 parts of dimethyl 2,2-azobis(isobutyrate) (V-601 produced by FUJIFILM Wako Pure Chemical Corporation) as a polymerization initiator was added dropwise over 2 hours to carry out a polymerization reaction. Once this dropwise addition was complete, the reaction was carried out for a further 3 hours at 110°C, 0.6 parts of the polymerization initiator described above was further added, and the reaction was continued for 1 hour at 110°C to yield a solution containing a polymer.

The solution containing the polymer was cooled to room temperature (23°C) and was subsequently neutralized through addition of 23.3 parts (amount for 100% neutralization of sulfo groups included in polymer) of dimethylaminoethanol. In addition, 400 parts of water was added, heating was subsequently performed to 100°C, and n-butanol was removed azeotropically with water to yield a solution containing a polymer as a dispersant (A).

The obtained dispersant (A) was used to measure the average number of aromatic hydrocarbon monocycles per one molecule of the dispersant (A), the average number of functional groups including either or both of a sulfur atom and a nitrogen atom per one molecule of the dispersant (A), the weight-average molecular weight of the dispersant (A), and the viscosity of a 20 mass% aqueous solution of the dispersant (A). The results are shown in Table 2.

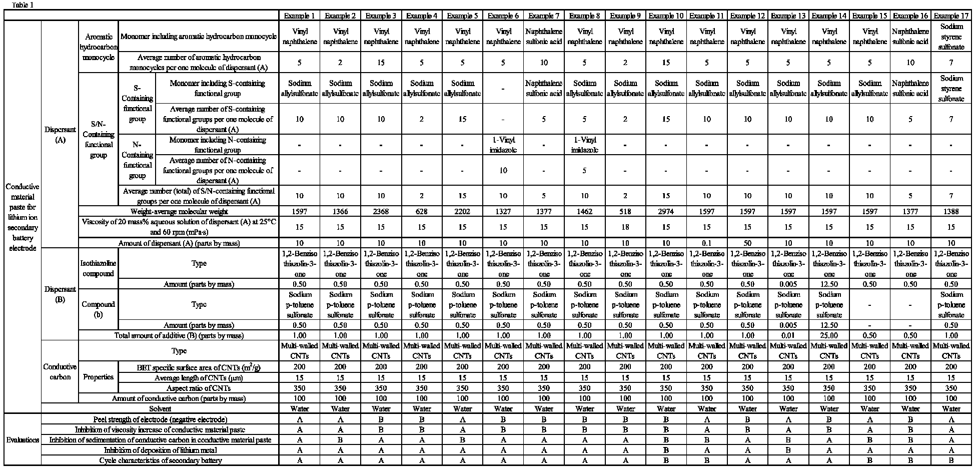

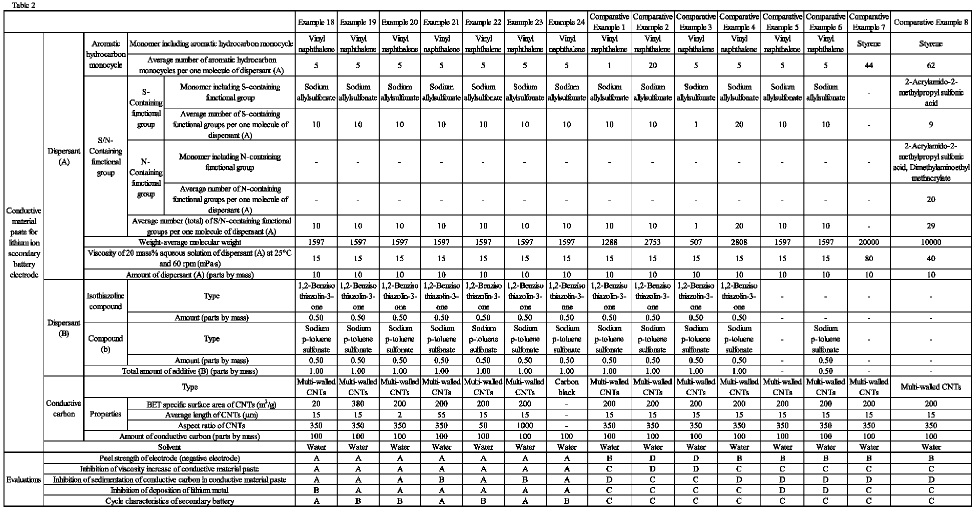

**Table 3**

| | | Example 1 | Example 2 | Example 3 | Example 4 | Example 5 | Example 6 | Example 8 | Example 9 | Example 10 | Example 17 | Comparative Example 1 | Comparative Example 2 | Comparative Example 3 | Comperative Example 4 |
|---|---|---|---|---|---|---|---|---|---|---|---|---|---|---|---|
| Amount used in production of dispersant (A) (parts by mass) | Vinyl naphthlene | 21 | 10 | 45 | 57 | 15 | 29 | 25 | 35 | 35 | - | 5.1 | 51 | 73 | 12 |
| | Sodim allylsulfonate | 79 | 90 | 55 | 43 | 85 | - | 45 | 65 | 65 | - | 94.9 | 49 | 27 | 88 |
| | 1-Vinyl imidazole | - | - | - | - | - | 71 | 30 | - | - | - | - | - | - | - |
| | Sodium styrene sulfonate | - | - | - | - | - | - | - | - | - | 100 | - | - | - | - |
| | Polymerization initiator (V-70) (in terms of solid content) | 25 | 26 | 20 | 30 | 22 | 25 | 23 | 45 | 15 | 25 | 26 | 15 | 30 | 20 |

It can be seen from Tables 1 and 2 that in the case of the conductive material pastes of Examples 1 to 24, which each contained a dispersant (A) including specific numbers of aromatic hydrocarbon monocycles and S/N-containing functional groups as averages per one molecule, a dispersant (B) including an isothiazoline compound, conductive carbon, and a solvent, the conductive carbon was dispersed well.

In contrast, it can be seen that conductive carbon was not dispersed well in the conductive material pastes of Comparative Examples 1 and 2 in which the used dispersant (A) included the specific number of S/N-containing functional groups as an average per one molecule but did not include the specific number of aromatic hydrocarbon monocycles as an average per one molecule.

It can also be seen that conductive carbon was not dispersed well in the conductive material pastes of Comparative Examples 3 and 4 in which the used dispersant (A) included the specific number of aromatic hydrocarbon monocycles as an average per one molecule but did not include the specific number of S/N-containing functional groups as an average per one molecule.

It can also be seen that conductive carbon was not dispersed well in the conductive material pastes of Comparative Examples 7 and 8 in which the used dispersant (A) did not include the specific numbers of aromatic hydrocarbon monocycles and S/N-containing functional groups as averages per one molecule.

It can also be seen that conductive carbon was not dispersed well in the conductive material pastes of Comparative Examples 5 and 6 in which an isothiazoline compound was not used as a dispersant (B).

### INDUSTRIAL APPLICABILITY

According to the present disclosure, it is possible to provide a conductive material paste for a lithium ion secondary battery electrode and a slurry composition for a lithium ion secondary battery electrode in which conductive carbon is dispersed well.

Moreover, according to the present disclosure, it is possible to provide an electrode for a lithium ion secondary battery that can sufficiently improve battery characteristics of a secondary battery and also to provide a lithium ion secondary battery having excellent battery characteristics such as cycle characteristics.

## Claims

1. A conductive material paste for a lithium ion secondary battery electrode comprising a dispersant (A), a dispersant (B), conductive carbon, and a solvent, wherein
the dispersant (A) is a compound that includes not fewer than 2 and not more than 15 aromatic hydrocarbon monocycles and includes not fewer than 2 and not more than 15 functional groups including either or both of a sulfur atom and a nitrogen atom as averages per one molecule, and
the dispersant (B) includes an isothiazoline compound.

2. The conductive material paste for a lithium ion secondary battery electrode according to claim 1, wherein the dispersant (A) has a weight-average molecular weight of not less than 500 and not more than 5,000.

3. The conductive material paste for a lithium ion secondary battery electrode according to claim 1 or 2, wherein not less than 0.1 parts by mass and not more than 50.0 parts by mass of the dispersant (A) is contained per 100 parts by mass of the conductive carbon.

4. The conductive material paste for a lithium ion secondary battery electrode according to any one of claims 1 to 3, wherein
the dispersant (B) further includes a compound (b),
the compound (b) includes not fewer than one and not more than two aromatic hydrocarbon monocycles and includes one functional group including either or both of a sulfur atom and a nitrogen atom, and
the compound (b) has a molecular weight of not less than 50 and not more than 500.

5. The conductive material paste for a lithium ion secondary battery electrode according to any one of claims 1 to 4, wherein not less than 0.01 parts by mass and not more than 25.00 parts by mass of the dispersant (B) is contained per 100 parts by mass of the conductive carbon.

6. The conductive material paste for a lithium ion secondary battery electrode according to any one of claims 1 to 5, wherein the conductive carbon includes one or more carbon nanotubes.

7. The conductive material paste for a lithium ion secondary battery electrode according to claim 6, wherein the carbon nanotubes have a BET specific surface area of not less than 10 m²/g and not more than 400 m²/g.

8. The conductive material paste for a lithium ion secondary battery electrode according to claim 6 or 7, wherein the carbon nanotubes have an average length of not less than 1.0 µm and not more than 60.0 µm.

9. The conductive material paste for a lithium ion secondary battery electrode according to any one of claims 6 to 8, wherein the carbon nanotubes have an aspect ratio of not less than 50 and not more than 1,000.

10. A slurry composition for a lithium ion secondary battery electrode comprising: an electrode active material; and the conductive material paste for a lithium ion secondary battery electrode according to any one of claims 1 to 9.

11. An electrode for a lithium ion secondary battery comprising an electrode mixed material layer formed using the slurry composition for a lithium ion secondary battery electrode according to claim 10.

12. A lithium ion secondary battery comprising a positive electrode, a negative electrode, a separator, and an electrolyte solution, wherein
at least one of the positive electrode and the negative electrode is the electrode for a lithium ion secondary battery according to claim 11.
